# EUROPÄISCHE PATENTSCHRIFT

(11) **EP 1 257 445 B1**
(45) Veröffentlichungstag und Bekanntmachung des Hinweises auf die Patenterteilung: **13.04.2005**
(21) Anmeldenummer: 01905804.9
(22) Anmeldetag: 20.02.2001
(51) Int. Cl.: B60S 1/38

(54) **WISCHBLATT ZUM REINIGEN VON SCHEIBEN VON KRAFTFAHRZEUGEN**
WIPER BLADE FOR CLEANING MOTOR VEHICLE WINDOWS
BALAI D'ESSUIE-GLACE POUR NETTOYER LES VITRES D'AUTOMOBILES

(30) Priorität: 21.02.2000 DE 10007809; 21.02.2000 DE 10007800
(43) Veröffentlichungstag der Anmeldung: 20.11.2002
(73) Patentinhaber: Valeo Wischersysteme GmbH, 74321 Bietigheim-Bissingen (DE)
(72) Erfinder: EGNER-WALTER, Bruno, 74076 Heilbronn (DE); LENZEN, Oliver, 74343 Sachsenheim (DE); GRANDEL, Michael, 74321 Bietigheim-Bissingen (DE); BLUMENSTOCK, Oliver, 74119 Untergruppenbach (DE)
(74) Vertreter: Jahn, Wolf-Diethart
(86) Internationale Anmeldenummer: PCT/EP2001/001888
(87) Internationale Veröffentlichungsnummer: WO 2001/062561

(56) Entgegenhaltungen:
- WO-A-00/34090
- DE-A- 19 736 368
- DE-A- 19 801 058
- FR-A- 2 679 185
- GB-A- 2 346 318
- US-A- 3 881 214

## Beschreibung

### Beschreibung für folgende Vertragsstaaten : DE, ES, GB

Die Erfindung betrifft ein Wischblatt für eine Wischeinrichtung zum Wischen von Scheiben von Fahrzeugen mit einem Wischgummi, das eine der Scheibe zugewandte Wischlippe ein der Scheibe abgewandtes Rückenteil und einen die Wischlippe mit dem Rückenteil verbindenden Kippsteg aufweist Das Wischblatt weist ferner ein das Wischgummi stabilisierendes, bandartiges, federelastisches Trageelement auf, welches mit einem quer zu der Längserstreckung des Wischblattes antreibbaren, zur Scheibe belastbaren Wischarm verbindbar ist. Außerdem ist an dem Wischblatt ein strömungsgünstig ausgebildetes, das Tragelement und das Rückenteil teilweise umgebendes Element vorgesehen, welches in zu der Scheibe paralleler, auf die Längserstreckung des Wischblattes gerichteter Ansicht, die der Strömungsrichtung entspricht, den Kippsteg abdeckt.

Aus der DE 299 03 123 U1 sind Wischblätter bekannt geworden, die eine federnde Einlage mit einer schlauchartigen elastomeren Umhüllung aufweisen, in welche ein Wischgummi eingesetzt ist. Bei solchen Wischblättern soll das Trageelement über das gesamte vom Wischblatt bestrichene Wischfeld der Scheibe eine möglichst gleichmäßige Verteilung des vom Wischarm ausgehenden Wischblatt-Anpressdrucks an der Scheibe gewährleisten. Das Trageelement weist dazu vorteilhafterweise eine geeignete Vorbiegung auf, um einen erforderlichen, gleichmäßigen Wischblatt-Anpressdruck gegen die Scheibe zu erreichen. Durch ein derartiges Trageelement wird die aufwendige Tragbügelkonstruktion mit zwei in der Wischleiste angeordneten Federschienen ersetzt, wie sie bei herkömmlichen Wischblättern praktiziert wird und beispielsweise aus der DE 15 053 97 A1 bekannt ist. Die gattungsgemäßen, bekannten Wischblätter weisen allerdings den Nachteil auf, dass sie einen aufwendigen Aufbau aufweisen. Ein solches Wischblatt sieht neben dem Trageelement quer zu dem Trageelement angeordnete Querleisten, in dem Trageelement angeordnete Aussparungen und in dem Wischgummi vorhandene Aufnahmenuten zur Aufnahme der das Trageelement wenigstens abschnittsweise umgebenden Ummantelung auf. Ein derartiger Aufbau des Wischblattes führt zu einer nicht zu vernachlässigende Bauhöhe, die im Fahrbetrieb große Nachteile mit sich bringt. Beispielsweise bietet die dem Fahrtwind zugewandte Seite des Wischblattes eine recht große Angriffsfläche für den auf das Wischblatt auftreffenden Fahrtwind. Außerdem baut sich auf der von dem Fahrtwind abgewandten Rückseite des Wischblattes ein erheblicher Unterdruck auf. Zwar verändert das im Betrieb meist eine Pendelbewegung ausführende Wischblatt seine Lage in Bezug auf den anströmenden Fahrtwind ständig, doch ist auch dann stets eine Längsseite des Wischblattes dem Fahrtwind mehr oder weniger stark zugewandt. Aufgrund des auf das Wischblatt wirkenden Fahrtwindes wird der Wischblatt-Anpressdruck insbesondere bei höheren Fahrtgeschwindigkeiten so verringert, dass das Wischblatt zum Abheben und Flattern neigt und kein ordnungsgemäßes Wischergebnis möglich ist. Eine Verstärkung des Wischblatt Anpressdrucks gegen die Scheibe mag bei hohen Fahrtgeschwindigkeiten zwar dieses Problem verkleinern, doch bei geringen Fahrtgeschwindigkeiten, wenn das Abhebebestreben des Wischblattes verringert wird, erhöht sich die Reibung zwischen dem Wischblatt und der Scheibe, was zu einer unerwünschten Geräuschbildung und zur unzulässig hohen Belastung der Antriebskomponenten und des Wischgummis führt.

Aus der DE 197 36 368 A1 sind auch solche Wischblätter bekannt, die im wesentlichen aus einer Wischleiste und wenigstens einer mit dieser Wischleiste verbundenen Federschiene bestehen. Diese vielfach auch als "Flachbau-Wischblätter" bezeichneten Wischblätter haben den Nachteil, dass die überstehenden Federschienen in hohem Masse störende Geräusche, insbesondere durch den Fahrtwind, erzeugen und auch eine Gefahrenquelle für Verletzungen darstellen.

Diese Mängel wurden bereits bei einem aus der EP 1 178 907 A0 bekannten Wischblatt behoben. Dieses Dokument zeigt ein Wischblatt für eine Wischeinrichtung zum Wischen von Scheiben von Fahrzeugen mit einem Wischgummi, das eine der Scheibe zugewandte Wischlippe, ein der Scheibe abgewandtes Rückenteil und einen die Wischlippe mit dem Rückenteil verbinden den Kippsteg aufweist. Das Dokument zeigt ferner ein das Wischgummi stabilisierendes , bandartiges, federelastisches Trageelement, welches mit einem quer zur Längserstreckung des Wischblattes antreibbaren, zur Scheibe belastbaren Wischarm verbindbar ist, wobei auf den an der Längsseite des Wischblattes aus dem Rückenteil hervorstehenden Teil der wenigstens einen Tragschiene ein die Tragschiene abdeckendes Abdeckprofil angebracht ist. Dieses Abdeckprofil erstreckt sich entlang der Längsseite des Rückenteiles des Wischgummis und deckt somit zwangsläufig diesen Bereich des Rückenteiles ab, wobei die Oberseite des Rückenteiles unbedeckt bleibt.

Der Inhalt des Dokumentes EP 1 178 907 A0 (WO-A-01/51323) gilt in seiner ursprünglich eingereichten Fassung gemäß Artikel 54(3) und (4) EPÜ als Stand der Technik, lediglich bei der Prüfung auf Neuheit zu berücksichtigen ist.

Aus der FR-A- 2 679 185 ist ein Wischblatt bekannt, bei der die Wischleise mit zwei seitlichen Nuten versehen ist. In diese Nuten werden Federschienen eingesetzt, die wiederum von einer die Wischleiste umgreifenden Ummantelung gehalten werden. Die Nuten bilden bei dieser Ausführungsform keinen Kippsteg, um den die Wischlippe kippen kann. Daher kann die Ummantelung auch keinen Kippsteg abdecken. Bei der GB-A-2 346 318 besitzt die Wischleiste ebenfalls keinen Kippsteg. In die in die Wischleise eingeformte Nuten sind Federschienen und umgebogene Längskanten der die Wischleiste umgreifenden Abdeckung eingesetzt. Ein Kippen der Wischlippe ist nicht möglich. Daher erzeugen die Nuten keinen Kippsteg.

Aufgabe der Erfindung ist es, ein Wischblatt aufzuzeigen, welches unter Beibehaltung der grundsätzlichen Vorteile eines bekannten Wischblattes verbesserte Eigenschaften aufweist.

Diese Aufgabe wird durch ein Wischblatt gemäß Patentanspruch 1 gelöst. Die Ummantelung ist stromlinienförmig ausgebildet, und in Längserstreckung des Wischblattes umschließt sie vollständig das Trageelement und das Rückenteil und deckt die der Wischleiste abgewandte Oberseite des Rückenteiles ab. In zu der Scheibe paralleler, auf die Längserstreckung des Wischblattes gerichteter Ansicht, die der Strömungsrichtung entspricht, deckt die Ummantelung den Kippsteg ab.

Ein derartiges Wischblatt weist insbesondere den Vorteil auf, dass es sehr flach ausgestaltet werden kann und nur eine sehr geringe Angriffsfläche für den Fahrtwind bildet.

Da das Trageelement, das Rückenteil sowie insbesondere auch die Kippkante von der Ummantelung abgedeckt wird, bietet sich für die auf das Wischblatt auftreffende, näherungsweise zur Scheibe parallelen Anströmung des Fahrtwind eine sehr geringe Angriffsfläche.

Ein weiterer Vorteil der Erfindung ist, dass aufgrund des einfachen Aufbaus des erfindungsgemäßen Wischblattes das Wischblatt ein sehr geringes Gesamtgewicht aufweist und gut montierbar ist.

Bei einer vorteilhaften Weiterbildung der Erfindung deckt die Ummantelung auch den der Scheibe abgewandten Teil der Wischlippe ab. Damit kann das Wischblatt noch flacher und ein noch günstigeres Anströmungsverhalten des Wischblattes erreicht werden.

Vorteilhafterweise kann in einer Ausbildung der Erfindung vorgesehen sein, dass die Ummantelung einen weitgehend elliptischen Querschnitt aufweist. Gerade ein solcher elliptischer Querschnitt weist einen relativ geringen Strömungswiderstand auf. Außerdem kann mittels eines elliptischen Querschnitts die erfindungsgemäße Wischleiste sehr flach ausgeführt werden.

Bei einer besonders bevorzugten Ausgestaltungsform der Erfindung weist die Ummantelung wenigstens abschnittsweise eine Oberflächenstrukturierung zur Reduzierung des Luftwiderstandes auf. Auch damit wird ein noch besseres Wischverhalten des erfindungsgemäßen Wischblattes erreicht.

Dabei ist insbesondere denkbar, dass die Oberflächenstrukturierung kugelsegmentförmige Vertiefungen aufweist. Gerade solche Vertiefungen führen zu einer günstigen turbulenten Grenzschicht an der Oberfläche der Ummantelung, die aufgrund des Golfballeffekts den Luftwiderstand des von dem Fahrtwind angeströmten Wischblattes zusätzlich verringert. Außerdem können mit einer solch strukturierten Oberfläche positive optische Effekte erreicht werden, die insbesondere den Wischblattbetrachter ansprechen können.

Bei einer anderen Ausgestaltung der Erfindung weist die Ummantelung an der Luvseite einen Turbulator auf. Ein solcher Turbulator ist dafür vorgesehen, ebenfalls eine turbulente Grenzschicht zu erzeugen, welche positive Auswirkungen auf das Wischverhalten des erfindungsgemäßen Wischblattes hat.

Bei einer weiteren Ausführungsform der Erfindung ist die Wischleiste mit Kippsteg in orthogonal zur Scheibe verlaufender Richtung federnd angeordnet. Durch eine solche Anordnung wird insbesondere der Wischblatt-Anpressdruck gleichmäßig über das Wischblatt verteilt und das Wischverhalten des Wischblattes verbessert.

Bei einer anderen Weiterbildung der Erfindung weist das Rückenteil zur federnden Anordnung der Wischlippe einen Membranbereich auf. Ein derartig angeordneter Membranbereich bietet sich deshalb an, weil das Rückenteil unmittelbar oberhalb der Wischlippe und des Kippsteges angeordnet ist.

Durch Vorhandensein des Membranbereichs im Bereich zwischen dem Kippsteg und der dem Kippsteg abgewandten Seite des Rückenteils kann zusätzlich erreicht werden, dass die über den Kippsteg eingeleitete federnde Bewegung der Wischlippe positiv beeinflusst wird.

Bei einer diesbezüglichen Weiterbildung der Erfindung ist vorgesehen, dass der Membranbereich durch in dem Rückenteil vorhandene Hohlräume gebildet wird. Solche Hohlräume können auf einfache und kostengünstige Art und Weise in dem Rückenteil der Wischleiste realisiert werden.

Vorteilhafterweise kann bei einer weiteren Ausführungsform der Erfindung vorgesehen sein, dass die Wandstärke zwischen dem Hohlraum und der der Wischlippe zugewandten Seite des Rückenteils etwa der Wandstärke des Kippsteges entspricht. Damit kann eine besonders günstige federnd elastische Kippbewegung der Gummilippe erreicht werden.

In einer besonders bevorzugten Ausgestaltungsform der Erfindung weist die Ummantelung eine Eigenstabilität auf, die das Wischblatt in seiner Gesamtheit stabilisiert und einer plastischen Verformung des Trageelements entgegenwirkt. Die Ummantelung übernimmt damit zusammen mit dem Trageelement die Hältefunktion des Wischblattes. Eine entsprechende Auslegung der Eigenstabilität der Ummantelung kann insbesondere auch dazu führen, dass die Gesamtfederkennlinie des Wischblattes positiv beeinflusst wird.

Bei einer Weiterbildung der Erfindung umschließt die Ummantelung auch die freien Enden des Trageelements und des Rückenteils. Damit kann die Eigenstabilität der Ummantelung zusätzlich erhöht werden, wodurch das Wischverhalten der Wischleiste ebenfalls verbessert werden kann.

Bei einer Weiterbildung der Erfindung ist auch denkbar, dass die Ummantelung an ihren freien Enden Abdeckkappen aufweist. Solche Abdeckkappen, die insbesondere lösbar ausgestaltet sein können, haben den Vorteil, dass das Wischgummi gegebenenfalls entfernbar bzw. austauschbar ist.

Eine Variante der Erfindung sieht vor, dass die dem Rückenteil zugewandte Seite des Trageelements mit der dem Trageelement zugewandten Seite des Rückenteils verklebt ist. Aufgrund einer solchen Verklebung kann eine verbesserte Torsionssteifigkeit des Wischblattes erreicht werden.

Bei einer anderen Ausgestaltung der Erfindung ist das Trageelement ein Metallfederelement und die Ummantelung ein Kunststoffelement. Die Verwendung derartiger Materialien hat sich als besonders vorteilhaft erwiesen.

Bei einer Weiterbildung der Erfindung kann auch vorgesehen sein, dass das Trageelement beschichtet, insbesondere kunststoffbeschichtet, ist. Durch eine solche Beschichtung wird das Trageelement insbesondere vor Umwelteinflüssen, wie z.B. Regenwasser, beschützt.

Die eingangs gestellte Aufgabe der Erfindung wird auch durch ein Wischblatt mit den Merkmalen des Patentanspruchs 17 gelöst, wobei vorteilhafte Ausgestaltungen oder Weiterbildungen den Patentansprüchen 18 bis 31 zu entnehmen sind.

Die Erfindung sowie weitere vorteilhafte Ausgestaltungen und Einzelheiten werden im Folgenden anhand der in der Zeichnung dargestellten Ausführungsbeispiele näher beschrieben und erläutert.

Es zeigen:
- Fig. 1:: einen Querschnitt durch ein erstes Ausführungsbeispiel eines erfindungsgemäßen Wischblattes;
- Fig. 2:: eine perspektivische Ansicht eines Ausschnitts des Wischblattes nach Fig. 1;
- Fig. 3 - 6: jeweils in vereinfachter Darstellung und im Schnitt verschiedene mögliche Ausführungsformen des Wischblattes gemäß der Erfindung;
- Fig. 7: in vereinfachter Darstellung und in Draufsicht eine Federschiene zur Verwendung bei einem der Wischblätter der Figuren 3 - 6.

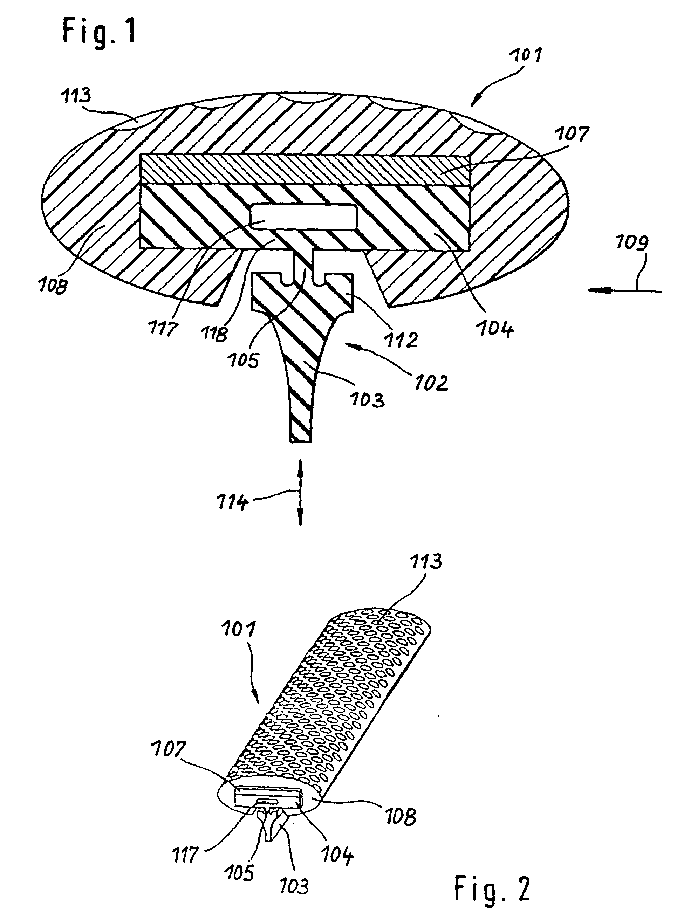

Die Fig. 1 zeigt ein erfindungsgemäßes Wischblatt 101 für eine Wischeinrichtung zum Wischen von Scheiben von Fahrzeugen mit einem Wischgummi 102, das eine der Scheibe zugewandte Wischlippe 103, ein der Scheibe abgewandtes Rückenteil 104 und ein die Wischlippe 103 mit dem Rückenteil 104 verbindenden Kippsteg 105 aufweist. In dem in Fig. 1 gezeigten Querschnitt ist außerdem ein das Wischgummi 102 stabilisierendes, bandartiges federelastisches Trageelement 107 dargestellt, welches vorzugsweise mit der dem Trageelement 107 zugewandten Seite des Rückenteils 104 verklebt ist. Das Trageelement 107 und das Rückenteil 104 des Wischgummis 102 ist von einer Ummantelung 108 vollständig umschlossen. Die Ummantelung 108 ist dabei stromlinienförmig ausgebildet und weist einen weitgehend elliptischen Querschnitt auf. In zu der Scheibe paralleler, auf die Längserstreckung des Wischblattes 101 gerichteter Ansicht, die einer Ansicht entsprechend dem Pfeil 109 entspricht, ist der Kippsteg 105 sowie ein der Scheibe abgewandter Teil 112 der Wischlippe 103 von der Ummantelung 108 abgedeckt.

Die Ummantelung 108 weist auf ihrer der Wischlippe 103 abgewandten Seite eine Oberflächenstrukturierung, nämlich kugelsegmentförmige Vertiefungen 113, auf, die zur Reduzierung des Luftwiderstandes des Wischblattes aufgrund des sogenannten Golfballeffekts vorgesehen sind. Insbesondere in Fig. 2 sind die kugelsegmentförmigen Vertiefungen deutlich zu erkennen.

Die Wischlippe 103 ist bei dem in Fig. 1 und Fig. 2 dargestellten erfindungsgemäßen Wischblatt 101 mit dem Kippsteg 105 in orthogonal zur Scheibe verlaufender Richtung, welche durch den Pfeil 114 angedeutet ist, federnd gelagert. Zur federnden Lagerung weist das Rückenteil 104 einen Membranbereich, nämlich einen in dem Rückenteil sich in Längserstreckung des Wischblattes 103 erstreckenden Hohlraum 117, auf. Zur optimalen Federung sowie zur Verbesserung des Kippverhaltens der Wischlippe ist vorgesehen, dass die Wandstärke 118 zwischen dem Hohlraum 117 und der der Wischlippe 103 zugewandten Seite des Rückenteils 104 etwa der Wandstärke des Kippsteges 105 entspricht.

Bei dem in Fig. 1 und 2 gezeigten Wischblatt 101 ist das Trageelement 107 vorteilhafterweise ein Metallfederelement. Die Verwendung eines solchen Trageelements 107 hat den Vorteil, dass eine erhöhte Torsionssteifigkeit des Wischblattes erreicht werden kann.

Wie aus insbesondere der Fig. 2 deutlich hervorgeht, erstreckt sich die Ummantelung 108 über die gesamte Länge des Wischblattes 101. Aufgrund der in Fig. 1 deutlich zu erkennenden Wandstärke der Ummantelung 108 weist die Ummantelung 108 eine günstige Eigenstabilität auf, die das Wischblatt 101 in seiner Gesamtheit stabilisiert und insbesondere auch einer möglichen, durch äußere Einflüsse hervorgerufenen plastischen Verformung des Trageelements 107 entgegenwirkt.

Das in Fig. 1 und 2 dargestellte Wischblatt 101 ist sehr flach ausgestaltet und weist einen sehr geringen Luftwiderstand, insbesondere durch den elliptischen Querschnitt der weitgehend von der Ummantelung 108 in Strömungsrichtung 109 des Fahrtwinds abgedeckten Wischlippe 103 sowie der auf der Oberfläche der Ummantelung 108 angeordneten kugelsegmentförmigen Vertiefungen 113, auf. Damit wirken insbesondere auch bei höheren Fahrzeuggeschwindigkeiten geringere Anströmkräfte auf das erfindungsgemäße Wischblatt 101. Ein Abheben des Wischblattes 101 von der Fahrzeugscheibe ist weitgehend ausgeschlossen.

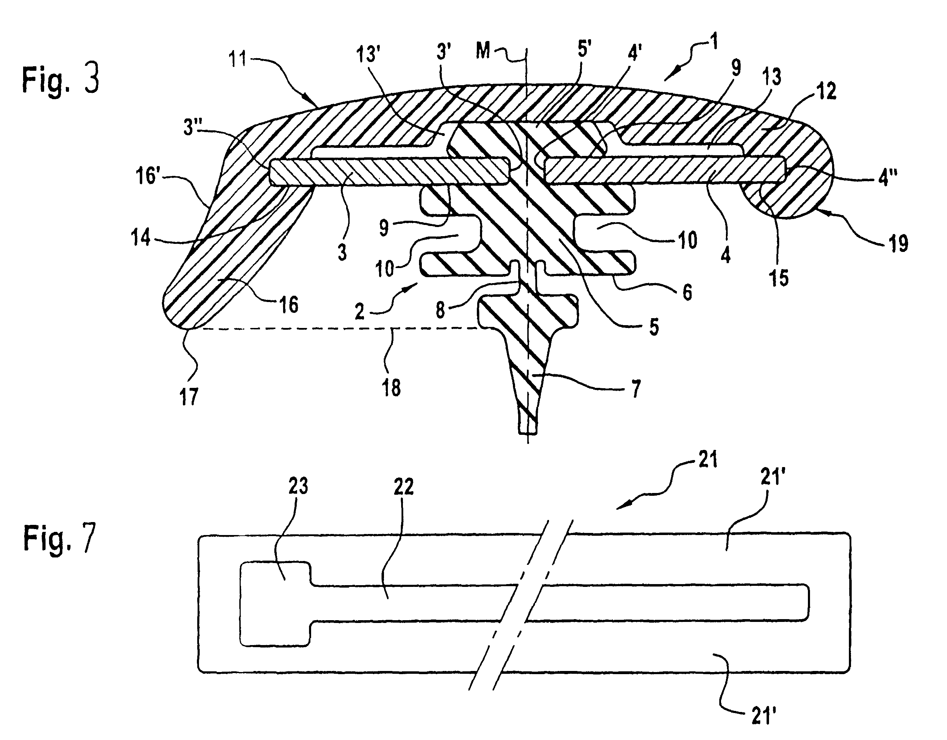

Das in der Figur 3 allgemein mit 1 bezeichnete Wischblatt besteht in an sich bekannter Weise aus einer Wischleiste 2, die aus einem gummielastischen Material hergestellt ist, und zwar beispielsweise durch Spritzgießen, Pressen oder Extrudieren, sowie aus zwei flachbandartigen Trag- und Federschienen 3 und 4, die jeweils aus einem federnden Flachbandmaterial, beispielsweise aus Federstahl oder Federbandstahl gefertigt sind und sich ebenso wie die Wischleiste 2 über die gesamte Länge des Wischblattes 1 erstrecken.

Das Querschnittsprofil der Wischleiste 2 setzt sich aus einem oberen Profilabschnitt oder Wischleistenkörper 5 sowie aus einer über die Unterseite 6 dieses Wischleistenkörpers wegstehenden Wischlippe 7 zusammen, die über einen Kippsteg 8 einstückig mit dem Wischleistenkörper 5 hergestellt ist und im Verwendungsfall des Wischblattes 1 gegen die zu reinigende Fahrzeugscheibe anliegt.

Mit M ist in der Figur 3 eine Mittelebene bezeichnet, die die Längsachse der Wischleiste 2 einschließt und senkrecht zur Zeichenebene der Figur 3 liegt. Zu dieser Mittelebene M sind die Wischleiste 2, deren Körper 5, die Wischlippe 7 und der Kippsteg 8 symmetrisch ausgebildet.

An jeder Längsseite ist die Wischleiste 2 mit zwei zu dieser Längsseite und zu den Enden der Wischleiste 2 hin offenen Nuten 9 und 10 ausgebildet, von denen die Nut 9 von der Unterseite 6 einen größeren Abstand und die Nut 10 einen kleineren Abstand aufweisen. In jeder Nut 9 ist eine Federschiene 3 bzw. 4 teilweise aufgenommen, und zwar entlang einer innenliegenden Längskante 3' bzw. 4' der betreffenden Federschiene 3 bzw. 4. Jede Federschiene 3 bzw. 4 steht mit dem größeren Teil ihrer Breite aus der zugehörigen Nut 9 seitlich vor. Die Federschienen 3 und 4 liegen mit ihren Oberflächenseiten, d.h. mit ihrer Ober- und Unterseite jeweils in einer gemeinsamen, senkrecht zur Mittelebene M verlaufenden Ebene. Bei der dargestellten Ausführungsform stehen die Federschienen 3 und 4 jeweils mit etwa zwei Drittel ihrer Breite aus der betreffenden Nut 9 vor. Zumindest an den beiden Enden des Wischblattes 1 sind die Federschienen 3 und 4 in an sich bekannter Weise z.B. durch ein Verbindungselement miteinander verbunden und dadurch auch an der Wischleiste 2 gehalten.

Auf die der Wischlippe 7 abgewandte Oberseite der von der Wischleiste 2 und den Federschienen 3 und 4 gebildeten Anordnung ist eine Ummantelung oder Abdeckung 11 aufgesetzt.

Der Querschnitt der Abdeckung 11 ist von einem leistenartigen Abschnitt oder Körper 12 gebildet, der an seiner der Wischlippe 7 abgewandten Oberseite im wesentlichen symmetrisch zur Mittelebene M konvex gewölbt ist, und zwar um Krümmungsachsen parallel zur Längserstreckung des Wischblattes 1. An der der Wischleiste 2 zugewandten Unterseite ist der Körper 12 mit einer Ausnehmung 13 versehen, die bei der dargestellten Ausführungsform im wesentlichen symmetrisch zur Mittelebene M ausgebildet ist und in der die beiden Federschienen 3 und 4 mit ihren aus den Nuten 9 vorstehenden Bereichen sowie auch zumindest ein oberer Abschnitt 5' des Wischleistenkörpers 5 aufgenommen ist. Zur Aufnahme des Abschnittes 5' weist die Ausnehmung 13 in der Mitte eine sich über die gesamte Länge der Ausnehmung 13 erstreckende Vertiefung 13' auf, deren Querschnitt dem trapezförmigen Querschnitt des die Oberseite der Wischleiste 2 bildenden Abschnittes 5' angepaßt ist. Die Federschienen 3 und 4 greifen mit ihren außen liegenden Längskanten 3'' bzw. 4'' jeweils in Nuten 14 bzw. 15 ein, die an den Längsseiten der Ausnehmung 13 gebildet sind, so daß die Abdeckung 11 über die Federschienen 3 am Wischblatt 1 gehalten ist. Die beiden Federschienen 3 und 4 sind wiederum nur mit einem Teil ihrer Breite von den Nuten 3'' und 4'' aufgenommen, so daß sie sich jeweils über einen Teil ihrer Breite frei zwischen den Nuten 9 und 14 bzw. 15 erstrecken.

An der einen, sich in Längsrichtung des Wischblattes 1 erstreckenden Seite geht der Körper 12 in einem über die Unterseite der Abdeckung 11 vorstehenden leistenartigen und sich über die gesamte Länge der Abdeckung 11 erstreckenden Abschnitt 16 über, der bei montierter Abdeckung 11 mit seinem unteren freien Rand 17 bezogen auf eine Ebene senkrecht zur Mittelebene M auf einem gemeinsamen Niveau 18 mit dem oberen, dem Kippsteg 8 zugewandten Bereich der Wischlippe 7 liegt. Im Verwendungsfall ist das Wischblatt 1 so am jeweiligen Fahrzeug montiert, daß die mit dem Abschnitt 16 versehene Längsseite des Wischblattes 1 die in Fahrtrichtung des Fahrzeugs vordere Wischblatt-Längsseite bildet. Der Abschnitt 16 bildet einen vorgesetzten Spoiler, und zwar mit einer außen liegenden, der Wischleiste 2 abgewandten Spoilerfläche 16', die insgesamt gesehen mit einer Ebene senkrecht zur Mittelebene M einen Winkel kleiner als 90° einschließt, der sich zu der Wischleiste 2 hin öffnet und die um Achsen parallel zur Längsachse des Wischblattes konvex gewölbt ist.

An der anderen Längsseite, d.h. im Bereich der Nut 15 bildet die Abdeckung 11 einen wulstförmigen Rand 19.

Die Abdeckung 11 ist aus einem geeigneten, beispielsweise elastischen Material, z.B. aus einem gummielastischen Kunststoff hergestellt, und zwar z.B. durch Extrudieren eines entsprechenden Profils. Grundsätzlich besteht auch die Möglichkeit, die Abdeckung 11 in einem Spritzgießverfahren oder durch Pressen herzustellen, wobei es hier dann auch möglich ist, die Ausnehmung 13 so zu formen, daß sie an den beiden Enden der Abdeckung 11 ebenfalls seitlich verschlossen ist, beispielsweise mit einem dem Rand 19 entsprechenden Rand, so daß die Wischleiste 2 und die Federschienen 3 und 4 bzw. die diese Federschienen an den Wischblattenden verbindenden Mittel dort auch stirnseitig von der Abdeckung 11 abgedeckt sind.

Es versteht sich, daß die Länge der Abdeckung 11 auf jeden Fall so gewählt ist, daß diese das Wischblatt 2 und die Federschienen 3 und 4 auf der gesamten Länge sowie auch die an den Wischblattenden vorgesehenen Verbindungselemente für die Federschienen 3 und 4 abdeckt.

Die Vorteile der Abdeckung 11 sind u.a. folgende:
- Durch die Abdeckung 11 wird eine Verletzungsgefahr an den seitlich über die Wischleiste 2 wegstehenden Federschienen 3 und 4 vermieden;
- durch die Abdeckung 11 wird für das Wischblatt eine strömungstechnisch optimale äußere Kontur erreicht, so daß bei guter Wischqualität des Wischblattes auch störende, bei hohen Fahrgeschwindigkeiten durch den Luftstrom erzeugte Geräusche vermieden sind.;
- durch die Verwendung der Abdeckung 11 ist es weiterhin möglich, die Federschienen 3 und 4 mit einer im Vergleich zur Wischleiste 2 großen Breite auszubilden oder umgekehrt, die Wischleiste 2 sehr schmal und kompakt zu halten, wobei der Querschnitt der Federschienen 3 und 4 in jedem Fall so gewählt werden kann, daß ein optimales Anliegen des Wischblattes 1 gegen die Fahrzeugscheibe und damit eine optimale Wischqualität gewährleistet sind.

Ein weiterer Vorteil des Wischblattes 1 besteht darin, daß durch die Form der Abdeckung 11, insbesondere durch den von dem Abschnitt 16 gebildeten vorgesetzten Spoiler, ein besonders niedriger Luftwiderstand erreicht und ein Unterströmen des Wischblattes und eine hiermit verbundene Verschlechterung der Wischqualität verhindert ist.

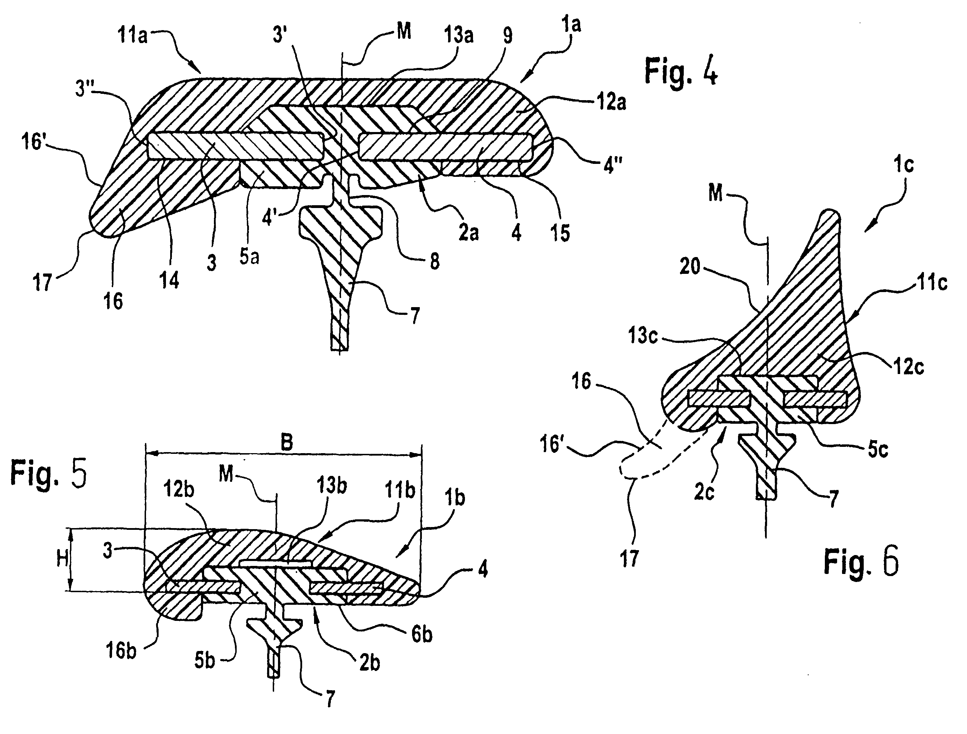

Die Figur 4 zeigt als weitere mögliche Ausführungsform ein Wischblatt 1a, welches aus der der Wischleiste 2 entsprechenden Wischleiste 2a mit dem Wischleistenkörper 5a und der über den Kippsteg 8 angeformten Wischlippe 7, aus den beiden Federschienen 3 und 4 und aus der Abdeckung 11a besteht. Das Wischblatt 1a unterscheidet sich vom Wischblatt 1 zunächst dadurch, daß der Wischleistenkörper 5a an jeder Längsseite nur die Nut 9 aufweist und die Nuten 9 sowie die den Nuten 14 und 15 an den Seiten der der Ausnehmung 13 entsprechenden Ausnehmung 13a in ihrer Tiefe so gewählt sind, daß die Federschienen 3 und 4 über ihre gesamte Breite von jeweils einer Nut 9 und der benachbarten Nut 14 bzw. 15 aufgenommen sind. Weiterhin ist die Ausnehmung 13a derart an den Querschnitt des Wischleistenkörpers 5a angepaßt, daß letzterer die Ausnehmung 13a vollständig ausfüllt bzw. im wesentlichen vollständig von der Ausnehmung 13a aufgenommen ist.

Bei der Wischleiste 1a ist die Abdeckung 11a an ihrer Oberseite flach ausgeführt und zu den angrenzenden Längsseiten hin abgerundet, wobei die Abdeckung 11a an der im Verwendungsfall in Fahrtrichtung vorderen Längsseite des Wischblattes 1a wiederum den über die Unterseite der Abdeckung vorstehenden leistenartigen Vorsprung 16 mit dem freien Rand 17 bildet.

Die Figur 5 zeigt als weitere Ausführungsform ein Wischblatt 1b, welches dem Wischblatt 1a sehr ähnlich ist und aus der Wischleiste 2b mit dem Wischleistenkörper 5b und der über den Kippsteg 8 angeformten Wischlippe 7, aus den beiden Federschienen 3 und 4 und der Abdeckung 11b besteht. Bei dieser Ausführungsform ist der im Querschnitt rechteckförmige Wischleistenkörper 5b vollständig in der an diesen Querschnitt angepaßten Ausnehmung 13b der Abdeckung 11b aufgenommen. Die Abdeckung 11b bzw. deren Körper 12b weisen ein tropfförmiges Querschnittsprofil, d.h. ein Querschnittsprofil auf, welches dem Profil eines halben Wassertropfens ähnlich ist. Die Außenfläche bzw. Außenkontur der Abdeckung 11b ist asymmetrisch zur Mittelebene M ausgebildet, und zwar um parallel zur Längserstreckung des Wischblattes 1b verlaufende Krümmungsachsen derart, daß an dem in der Figur 5 linken Rand der Krümmungsradius klein ist und ausgehend von diesem linken Rand zur rechten Längsseite hin zunimmt. Die Ausbildung ist weiterhin so getroffen, daß das Verhältnis H/B etwa im Bereich zwischen 1/8 und 1/4 liegt, wobei B die maximale Breite ist, die die Abdeckung 11b in der Achsrichtung senkrecht zur Mittelbene M aufweist, und H die maximale Höhe bzw. der maximale Abstand zwischen der Ebene der Unterseiten der Federschienen 3 bzw. 4 und der Oberseite der Abdeckung 11b ist. Die Federschienen 3 und 4 liegen mit ihren Oberflächenseiten wiederum in gemeinsamen Ebenen senkrecht zur Mittelebene M.

Wie die Figur 5 auch zeigt, schließt die Abdeckung 11b im Bereich der in dieser Figur rechten Längsseite, d.h. im Bereich der Federschiene 4 bündig mit der Unterseite 6b der Wischleiste 2b ab, während an der gegenüberliegenden Längsseite, d.h. im Bereich der Federschiene 3 die Abdeckung 11b einen über die Unterseite 6b vorstehenden, sich über die gesamte Länge der Abdeckung 11b erstreckenden Abschnitt 16b bildet. Dieser liegt mit seinem unteren freien Rand wiederum - bezogen auf eine Ebene senkrecht zur Mittelebene M - niveaugleich mit dem oberen Bereich der Wischlippe 7 und ergänzt die Tropfenform der Abdeckung 11b an dieser Längsseite. Im Verwendungfall befindet sich der Abschnitt 16b an der in Fahrtrichtung vorderen Wischblatt-Längsseite.

Das Wischblatt 1b hat durch die beschriebene Formgebung der Abdeckung 1b den Vorteil einen besonders niedrigen Strömungswiderstand, wobei auch Windgeräusche stark reduziert werden. Zur weiteren Reduzierung der Windgeräusche kann die umströmte Oberfläche auch mit kleinen zusätzlichen Erhebungen, beispielsweise in der Größenordnung von 0,1 - 2 mm versehen sein.

Die Figur 6 zeigt als weitere mögliche Ausführungsform ein Wischblatt 1c, welches sich von dem Wischblatt 1b im wesentlichen nur dadurch unterscheidet, daß anstelle der Abdeckung 11b mit der Tropfenformkontur eine Abdeckung 11c vorgesehen ist, deren Körper 12c als Spoiler mit einer Spoilerfläche 20 ausgeführt ist. Wie in der Figur 6 mit unterbrochenen Linien dargestellt ist, besteht die Möglichkeit, die Abdeckung 11c an derjenigen Längsseite, an der die Spoilerfläche 20 den geringsten Abstand von der zu reinigenden Fahrzeugscheibe aufweist und die bezogen auf die Fahrtrichtung die vordere Wischblatt-Längsseite bildet, wiederum mit dem nach unten überstehenden Abschnitt 16 zu versehen.

Durch die spoilerartige Ausbildung der Abdeckung 11c wird zwar der Luftwiderstand des Wischblattes 1c etwas vergrößert, diese Formgebung der Abdeckung 11c hat aber den Vorteil, daß das Hochgeschwindigkeitsverhalten der Wischleiste 1c insgesamt wesentlich verbessert wird.

Die Figur 7 zeigt in vereinfachter Darstellung und in Draufsicht eine Federschiene 21, welche von einer Länge eines federnden Flachmaterials, nämlich beispielsweise eines Federbandstahls gebildet und in geeigneter Weise, beispielsweise durch Stanzen mit einem Schlitz 22 versehen ist, der an den beiden Enden der Federschiene 21 geschlossen ist. An einem Ende der Federschiene weist der Schlitz 22 eine Erweiterung zur Bildung einer Einführöffnung 23 auf.

Die Breite des Schlitzes 22 (außerhalb der Einführöffnung 23) entspricht dem Abstand, den in den Figuren 3 - 6 die innenliegenden Längskanten 3' und 4' der Federschienen 3 und 4 aufweisen. Im Bereich der Einführöffnung 23 besitzt der Schlitz 22 in Richtung senkrecht zur seiner Längserstreckung eine Breite, die in etwa gleich der Breite der jeweiligen Wischleiste 2 - 2c ist, so daß die jeweilige Wischleiste durch Einfädeln über die Öffnung 23 an der Federschiene 21 derart befestigt werden kann, daß die beidseitig vom Schlitz 22 vorgesehenen Abschnitte 21' der Federschiene 21 in die Nuten 9 und 14 bzw. 15 eingreifen, wie dies vorstehend für die Federschienen 3 bzw. 4 beschrieben wurde.

Die Federschiene 21 ist für die Wischblätter 1 - 1c anstelle von einzelnen Federschienen 3 und 4 verwendbar. Grundsätzlich ist die Federschiene 21 aber auch bei anderen Wischblättern einsetzbar, die aus einer Wischleiste und zwei in seitliche Nuten der Wischleiste eingreifenden Federschienen bestehen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1, 1a, 1b, 1c: Wischblatt
- 2, 2a, 2b, 2c: Wischleiste
- 3, 4: Federschiene
- 3', 4'; 3'', 4'': Federschienenlängsseite
- 5, 5a, 5b, 5c: Wischleistenkörper
- 5': Abschnitt
- 6, 6b: Wischleistenunterseite
- 7: Wischlippe
- 8: Kippsteg
- 9, 10: Nut
- 11, 11a, 11b, 11c: Abdeckung
- 12, 12a, 12b, 12c: Abdeckungskörper
- 13, 13a, 13b, 13c: Ausnehmung
- 13': Vertiefung
- 14, 15: Nut
- 16, 16b: leistenartiger Vorsprung
- 16': Spoilerfläche
- 17: Rand
- 18: Niveau
- 19: Rand
- 20: Spoilerfläche
- 21: Federschiene
- 21': Abschnitt
- 22: Schlitz
- 23: Einführöffnung

- 101: Wischblatt
- 102: Wischgummi
- 103: Wischlippe
- 104: Rückenteil
- 105: Kippsteg
- 107: Trageelement
- 108: Ummantelung
- 109: Ansicht
- 112: Teil Wischlippe
- 113: kugelsegmentförmige Vertiefungen
- 114: Richtung Federung (103)
- 117: Hohlraum
- 118: Wandstärke

### Beschreibung für folgende Vertragsstaaten : FR, IT

Die Erfindung betrifft ein Wischblatt gemäß dem Oberbegriff des Patentanspruches 1 oder 17, das jenem nach der DE 299 03 123 U1 gattungsgemäß ausgebildet ist.

Aus der DE 299 03 123 U1 sind Wischblätter bekannt geworden, die eine federnde Einlage mit einer schlauchartigen elastomeren Umhüllung aufweisen, in welche ein Wischgummi eingesetzt ist. Bei solchen Wischblättern soll das Trageelement über das gesamte vom Wischblatt bestrichene Wischfeld der Scheibe eine möglichst gleichmäßige Verteilung des vom Wischarm ausgehenden Wischblatt-Anpressdrucks an der Scheibe gewährleisten. Das Trageelement weist dazu vorteilhafterweise eine geeignete Vorbiegung auf, um einen erforderlichen, gleichmäßigen Wischblatt-Anpressdruck gegen die Scheibe zu erreichen. Durch ein derartiges Trageelement wird die aufwendige Tragbügelkonstruktion mit zwei in der Wischleiste angeordneten Federschienen ersetzt, wie sie bei herkömmlichen Wischblättern praktiziert wird und beispielsweise aus der DE 15 053 97 A1 bekannt ist.

Die gattungsgemäßen, bekannten Wischblätter weisen allerdings den Nachteil auf, dass sie einen aufwendigen Aufbau aufweisen. Ein solches Wischblatt sieht neben dem Trageelement quer zu dem Trageelement angeordnete Querleisten, in dem Trageelement angeordnete Aussparungen und in dem Wischgummi vorhandene Aufnahmenuten zur Aufnahme der das Trageelement wenigstens abschnittsweise umgebenden Ummantelung auf. Ein derartiger Aufbau des Wischblattes führt zu einer nicht zu vernachlässigende Bauhöhe, die im Fahrbetrieb große Nachteile mit sich bringt. Beispielsweise bietet die dem Fahrtwind zugewandte Seite des Wischblattes eine recht große Angriffsfläche für den auf das Wischblatt auftreffenden Fahrtwind. Außerdem baut sich auf der von dem Fahrtwind abgewandten Rückseite des Wischblattes ein erheblicher Unterdruck auf. Zwar verändert das im Betrieb meist eine Pendelbewegung ausführende Wischblatt seine Lage in Bezug auf den anströmenden Fahrtwind ständig, doch ist auch dann stets eine Längsseite des Wischblattes dem Fahrtwind.mehr oder weniger stark zugewandt. Aufgrund des auf das Wischblatt wirkenden Fahrtwindes wird der Wischblatt-Anpressdruck insbesondere bei höheren Fahrtgeschwindigkeiten so verringert, dass das Wischblatt zum Abheben und Flattern neigt und kein ordnungsgemäßes Wischergebnis möglich ist. Eine Verstärkung des Wischblatt Anpressdrucks gegen die Scheibe mag bei hohen Fahrtgeschwindigkeiten zwar dieses Problem verkleinern, doch bei geringen Fahrtgeschwindigkeiten, wenn das Abhebebestreben des Wischblattes verringert wird, erhöht sich die Reibung zwischen dem Wischblatt und der Scheibe, was zu einer unerwünschten Geräuschbildung und zur unzulässig hohen Belastung der Antriebskomponenten und des Wischgummis führt.

Aus der DE 197 36 368 A1 sind auch solche Wischblätter bekannt, die im wesentlichen aus einer Wischleiste und wenigstens einer mit dieser Wischleiste verbundenen Federschiene bestehen. Diese vielfach auch als "Flachbau-Wischblätter" bezeichneten Wischblätter haben den Nachteil, dass die überstehenden Federschienen in hohem Masse störende Geräusche, insbesondere durch den Fahrtwind, erzeugen und auch eine Gefahrenquelle für Verletzungen darstellen.

Aus der FR-A- 2 679 185 ist ein Wischblatt bekannt, bei der die Wischleise mit zwei seitlichen Nuten versehen ist. In diese Nuten werden Federschienen eingesetzt, die wiederum von einer die Wischleiste umgreifenden Ummantelung gehalten werden. Die Nuten bilden bei dieser Ausführungsform keinen Kippsteg, um den die Wischlippe kippen kann. Daher kann die Ummantelung auch keinen Kippsteg abdecken. Bei der GB-A- 2 346 318 besitzt die Wischleiste ebenfalls keinen Kippsteg. In die in die Wischleise eingeformte Nuten sind Federschienen und umgebogene Längskanten der die Wischleiste umgreifenden Abdeckung eingesetzt. Ein Kippen der Wischlippe ist nicht möglich. Daher erzeugen die Nuten keinen Kippsteg.

Aufgabe der Erfindung ist es, ein Wischblatt aufzuzeigen, welches unter Beibehaltung der grundsätzlichen Vorteile eines bekannten Wischblattes verbesserte Eigenschaften aufweist.

Diese Aufgabe wird bei einem Wischblatt nach der DE 299 03 123 U1 mit den Merkmalen des Oberbegriffes des Patentanspruchs 1 erfindungsgemäß dadurch gelöst, dass die Ummantelung in zu der Scheibe paralleler, auf die Längserstreckung des Wischblattes gerichteter Ansicht, die der Strömungsrichtung entspricht, den Kippsteg abdeckt.

Ein derartiges Wischblatt weist insbesondere den Vorteil auf, dass es sehr flach ausgestaltet werden kann und nur eine sehr geringe Angriffsfläche für den Fahrtwind bildet.

Da das Trageelement, das Rückenteil sowie insbesondere auch die Kippkante von der Ummantelung abgedeckt wird, bietet sich für die auf das Wischblatt auftreffende, näherungsweise zur Scheibe parallelen Anströmung des Fahrtwind eine sehr geringe Angriffsfläche.

Ein weiterer Vorteil der Erfindung ist, dass aufgrund des einfachen Aufbaus des erfindungsgemäßen Wischblattes das Wischblatt ein sehr geringes Gesamtgewicht aufweist und gut montierbar ist.

Bei einer vorteilhaften Weiterbildung der Erfindung deckt die Ummantelung auch den der Scheibe abgewandten Teil der Wischlippe ab. Damit kann das Wischblatt noch flacher und ein noch günstigeres Anströmungsverhalten des Wischblattes erreicht werden.

Vorteilhafterweise kann in einer Ausbildung der Erfindung vorgesehen sein, dass die Ummantelung einen weitgehend elliptischen Querschnitt aufweist. Gerade ein solcher elliptischer Querschnitt weist einen relativ geringen Strömungswiderstand auf. Außerdem kann mittels eines elliptischen Querschnitts die erfindungsgemäße Wischleiste sehr flach ausgeführt werden.

Bei einer besonders bevorzugten Ausgestaltungsform der Erfindung weist die Ummantelung wenigstens abschnittsweise eine Oberflächenstrukturierung zur Reduzierung des Luftwiderstandes auf. Auch damit wird ein noch besseres Wischverhalten des erfindungsgemäßen Wischblattes erreicht.

Dabei ist insbesondere denkbar, dass die Oberflächenstrukturierung kugelsegmentförmige Vertiefungen aufweist. Gerade solche Vertiefungen führen zu einer günstigen turbulenten Grenzschicht an der Oberfläche der Ummantelung, die aufgrund des Golfballeffekts den Luftwiderstand des von dem Fahrtwind angeströmten Wischblattes zusätzlich verringert. Außerdem können mit einer solch strukturierten Oberfläche positive optische Effekte erreicht werden, die insbesondere den Wischblattbetrachter ansprechen können.

Bei einer anderen Ausgestaltung der Erfindung weist die Ummantelung an der Luvseite einen Turbulator auf. Ein solcher Turbulator ist dafür vorgesehen, ebenfalls eine turbulente Grenzschicht zu erzeugen, welche positive Auswirkungen auf das Wischverhalten des erfindungsgemäßen Wischblattes hat.

Bei einer weiteren Ausführungsform der Erfindung ist die Wischleiste mit Kippsteg in orthogonal zur Scheibe verlaufender Richtung federnd angeordnet. Durch eine solche Anordnung wird insbesondere der Wischblatt-Anpressdruck gleichmäßig über das Wischblatt verteilt und das Wischverhalten des Wischblattes verbessert.

Bei einer anderen Weiterbildung der Erfindung weist das Rückenteil zur federnden Anordnung der Wischlippe einen Membranbereich auf. Ein derartig angeordneter Membranbereich bietet sich deshalb an, weil das Rückenteil unmittelbar oberhalb der Wischlippe und des Kippsteges angeordnet ist.

Durch Vorhandensein des Membranbereichs im Bereich zwischen dem Kippsteg und der dem Kippsteg abgewandten Seite des Rückenteils kann zusätzlich erreicht werden, dass die über den Kippsteg eingeleitete federnde Bewegung der Wischlippe positiv beeinflusst wird.

Bei einer diesbezüglichen Weiterbildung der Erfindung ist vorgesehen, dass der Membranbereich durch in dem Rückenteil vorhandene Hohlräume gebildet wird. Solche Hohlräume können auf einfache und kostengünstige Art und Weise in dem Rückenteil der Wischleiste realisiert werden.

Vorteilhafterweise kann bei einer weiteren Ausführungsform der Erfindung vorgesehen sein, dass die Wandstärke zwischen dem Hohlraum und der der Wischlippe zugewandten Seite des Rückenteils etwa der Wandstärke des Kippsteges entspricht. Damit kann eine besonders günstige federnd elastische Kippbewegung der Gummilippe erreicht werden.

In einer besonders bevorzugten Ausgestaltungsform der Erfindung weist die Ummantelung eine Eigenstabilität auf, die das Wischblatt in seiner Gesamtheit stabilisiert und einer plastischen Verformung des Trageelements entgegenwirkt. Die Ummantelung übernimmt damit zusammen mit dem Trageelement die Hältefunktion des Wischblattes. Eine entsprechende Auslegung der Eigenstabilität der Ummantelung kann insbesondere auch dazu führen, dass die Gesamtfederkennlinie des Wischblattes positiv beeinflusst wird.

Bei einer Weiterbildung der Erfindung umschließt die Ummantelung auch die freien Enden des Trageelements und des Rückenteils. Damit kann die Eigenstabilität der Ummantelung zusätzlich erhöht werden, wodurch das Wischverhalten der Wischleiste ebenfalls verbessert werden kann.

Bei einer Weiterbildung der Erfindung ist auch denkbar, dass die Ummantelung an ihren freien Enden Abdeckkappen aufweist. Solche Abdeckkappen, die insbesondere lösbar ausgestaltet sein können, haben den Vorteil, dass das Wischgummi gegebenenfalls entfernbar bzw. austauschbar ist.

Eine Variante der Erfindung sieht vor, dass die dem Rückenteil zugewandte Seite des Trageelements mit der dem Trageelement zugewandten Seite des Rückenteils verklebt ist. Aufgrund einer solchen Verklebung kann eine verbesserte Torsionssteifigkeit des Wischblattes erreicht werden.

Bei einer anderen Ausgestaltung der Erfindung ist das Trageelement ein Metallfederelement und die Ummantelung ein Kunststoffelement. Die Verwendung derartiger Materialien hat sich als besonders vorteilhaft erwiesen.

Bei einer Weiterbildung der Erfindung kann auch vorgesehen sein, dass das Trageelement beschichtet, insbesondere kunststoffbeschichtet, ist. Durch eine solche Beschichtung wird das Trageelement insbesondere vor Umwelteinflüssen, wie z.B. Regenwasser, beschützt.

Die eingangs gestellte Aufgabe der Erfindung wird auch durch ein Wischblatt mit den Merkmalen des Patentanspruchs 17 gelöst, wobei vorteilhafte Ausgestaltungen oder Weiterbildungen den Patentansprüchen 18 bis 31 zu entnehmen sind.

Die Erfindung sowie weitere vorteilhafte Ausgestaltungen und Einzelheiten werden im Folgenden anhand der in der Zeichnung dargestellten Ausführungsbeispiele näher beschrieben und erläutert.

Es zeigen:
- Fig. 1:: einen Querschnitt durch ein erstes Ausführungsbeispiel eines erfindungsgemäßen Wischblattes;
- Fig. 2:: eine perspektivische Ansicht eines Ausschnitts des Wischblattes nach Fig. 1;
- Fig. 3 - 6: jeweils in vereinfachter Darstellung und im Schnitt verschiedene mögliche Ausführungsformen des Wischblattes gemäß der Erfindung;
- Fig. 7: in vereinfachter Darstellung und in Draufsicht eine Federschiene zur Verwendung bei einem der Wischblätter der Figuren 3 - 6.

Die Fig. 1 zeigt ein erfindungsgemäßes Wischblatt 101 für eine Wischeinrichtung zum Wischen von Scheiben von Fahrzeugen mit einem Wischgummi 102, das eine der Scheibe zugewandte Wischlippe 103, ein der Scheibe abgewandtes Rückenteil 104 und ein die Wischlippe 103 mit dem Rückenteil 104 verbindenden Kippsteg 105 aufweist. In dem in Fig. 1 gezeigten Querschnitt ist außerdem ein das Wischgummi 102 stabilisierendes, bandartiges federelastisches Trageelement 107 dargestellt, welches vorzugsweise mit der dem Trageelement 107 zugewandten Seite des Rückenteils 104 verklebt ist. Das Trageelement 107 und das Rückenteil 104 des Wischgummis 102 ist von einer Ummantelung 108 vollständig umschlossen. Die Ummantelung 108 ist dabei stromlinienförmig ausgebildet und weist einen weitgehend elliptischen Querschnitt auf. In zu der Scheibe paralleler, auf die Längserstreckung des Wischblattes 101 gerichteter Ansicht, die einer Ansicht entsprechend dem Pfeil 109 entspricht, ist der Kippsteg 105 sowie ein der Scheibe abgewandter Teil 112 der Wischlippe 103 von der Ummantelung 108 abgedeckt.

Die Ummantelung 108 weist auf ihrer der Wischlippe 103 abgewandten Seite eine Oberflächenstrukturierung, nämlich kugelsegmentförmige Vertiefungen 113, auf, die zur Reduzierung des Luftwiderstandes des Wischblattes aufgrund des sogenannten Golfballeffekts vorgesehen sind. Insbesondere in Fig. 2 sind die kugelsegmentförmigen Vertiefungen deutlich zu erkennen.

Die Wischlippe 103 ist bei dem in Fig. 1 und Fig. 2 dargestellten erfindungsgemäßen Wischblatt 101 mit dem Kippsteg 105 in orthogonal zur Scheibe verlaufender Richtung, welche durch den Pfeil 114 angedeutet ist, federnd gelagert. Zur federnden Lagerung weist das Rückenteil 104 einen Membranbereich, nämlich einen in dem Rückenteil sich in Längserstreckung des Wischblattes 103 erstreckenden Hohlraum 117, auf. Zur optimalen Federung sowie zur Verbesserung des Kippverhaltens der Wischlippe ist vorgesehen, dass die Wandstärke 118 zwischen dem Hohlraum 117 und der der Wischlippe 103 zugewandten Seite des Rückenteils 104 etwa der Wandstärke des Kippsteges 105 entspricht.

Bei dem in Fig. 1 und 2 gezeigten Wischblatt 101 ist das Trageelement 107 vorteilhafterweise ein Metallfederelement. Die Verwendung eines solchen Trageelements 107 hat den Vorteil, dass eine erhöhte Torsionssteifigkeit des Wischblattes erreicht werden kann.

Wie aus insbesondere der Fig. 2 deutlich hervorgeht, erstreckt sich die Ummantelung 108 über die gesamte Länge des Wischblattes 101. Aufgrund der in Fig. 1 deutlich zu erkennenden Wandstärke der Ummantelung 108 weist die Ummantelung 108 eine günstige Eigenstabilität auf, die das Wischblatt 101 in seiner Gesamtheit stabilisiert und insbesondere auch einer möglichen, durch äußere Einflüsse hervorgerufenen plastischen Verformung des Trageelements 107 entgegenwirkt.

Das in Fig. 1 und 2 dargestellte Wischblatt 101 ist sehr flach ausgestaltet und weist einen sehr geringen Luftwiderstand, insbesondere durch den elliptischen Querschnitt der weitgehend von der Ummantelung 108 in Strömungsrichtung 109 des Fahrtwinds abgedeckten Wischlippe 103 sowie der auf der Oberfläche der Ummantelung 108 angeordneten kugelsegmentförmigen Vertiefungen 113, auf. Damit wirken insbesondere auch bei höheren Fahrzeuggeschwindigkeiten geringere Anströmkräfte auf das erfindungsgemäße Wischblatt 101. Ein Abheben des Wischblattes 101 von der Fahrzeugscheibe ist weitgehend ausgeschlossen.

Das in der Figur 3 allgemein mit 1 bezeichnete Wischblatt besteht in an sich bekannter Weise aus einer Wischleiste 2, die aus einem gummielastischen Material hergestellt ist, und zwar beispielsweise durch Spritzgießen, Pressen oder Extrudieren, sowie aus zwei flachbandartigen Trag- und Federschienen 3 und 4, die jeweils aus einem federnden Flachbandmaterial, beispielsweise aus Federstahl oder Federbandstahl gefertigt sind und sich ebenso wie die Wischleiste 2 über die gesamte Länge des Wischblattes 1 erstrecken.

Das Querschnittsprofil der Wischleiste 2 setzt sich aus einem oberen Profilabschnitt oder Wischleistenkörper 5 sowie aus einer über die Unterseite 6 dieses Wischleistenkörpers wegstehenden Wischlippe 7 zusammen, die über einen Kippsteg 8 einstückig mit dem Wischleistenkörper 5 hergestellt ist und im Verwendungsfall des Wischblattes 1 gegen die zu reinigende Fahrzeugscheibe anliegt.

Mit M ist in der Figur 3 eine Mittelebene bezeichnet, die die Längsachse der Wischleiste 2 einschließt und senkrecht zur Zeichenebene der Figur 3 liegt. Zu dieser Mittelebene M sind die Wischleiste 2, deren Körper 5, die Wischlippe 7 und der Kippsteg 8 symmetrisch ausgebildet.

An jeder Längsseite ist die Wischleiste 2 mit zwei zu dieser Längsseite und zu den Enden der Wischleiste 2 hin offenen Nuten 9 und 10 ausgebildet, von denen die Nut 9 von der Unterseite 6 einen größeren Abstand und die Nut 10 einen kleineren Abstand aufweisen. In jeder Nut 9 ist eine Federschiene 3 bzw. 4 teilweise aufgenommen, und zwar entlang einer innenliegenden Längskante 3' bzw. 4' der betreffenden Federschiene 3 bzw. 4. Jede Federschiene 3 bzw. 4 steht mit dem größeren Teil ihrer Breite aus der zugehörigen Nut 9 seitlich vor. Die Federschienen 3 und 4 liegen mit ihren Oberflächenseiten, d.h. mit ihrer Ober- und Unterseite jeweils in einer gemeinsamen, senkrecht zur Mittelebene M verlaufenden Ebene. Bei der dargestellten Ausführungsform stehen die Federschienen 3 und 4 jeweils mit etwa zwei Drittel ihrer Breite aus der betreffenden Nut 9 vor. Zumindest an den beiden Enden des Wischblattes 1 sind die Federschienen 3 und 4 in an sich bekannter Weise z.B. durch ein Verbindungselement miteinander verbunden und dadurch auch an der Wischleiste 2 gehalten.

Auf die der Wischlippe 7 abgewandte Oberseite der von der Wischleiste 2 und den Federschienen 3 und 4 gebildeten Anordnung ist eine Ummantelung oder Abdeckung 11 aufgesetzt.

Der Querschnitt der Abdeckung 11 ist von einem leistenartigen Abschnitt oder Körper 12 gebildet, der an seiner der Wischlippe 7 abgewandten Oberseite im wesentlichen symmetrisch zur Mittelebene M konvex gewölbt ist, und zwar um Krümmungsachsen parallel zur Längserstreckung des Wischblattes 1. An der der Wischleiste 2 zugewandten Unterseite ist der Körper 12 mit einer Ausnehmung 13 versehen, die bei der dargestellten Ausführungsform im wesentlichen symmetrisch zur Mittelebene M ausgebildet ist und in der die beiden Federschienen 3 und 4 mit ihren aus den Nuten 9 vorstehenden Bereichen sowie auch zumindest ein oberer Abschnitt 5' des Wischleistenkörpers 5 aufgenommen ist. Zur Aufnahme des Abschnittes 5' weist die Ausnehmung 13 in der Mitte eine sich über die gesamte Länge der Ausnehmung 13 erstreckende Vertiefung 13' auf, deren Querschnitt dem trapezförmigen Querschnitt des die Oberseite der Wischleiste 2 bildenden Abschnittes 5' angepaßt ist. Die Federschienen 3 und 4 greifen mit ihren außen liegenden Längskanten 3'' bzw. 4'' jeweils in Nuten 14 bzw. 15 ein, die an den Längsseiten der Ausnehmung 13 gebildet sind, so daß die Abdeckung 11 über die Federschienen 3 am Wischblatt 1 gehalten ist. Die beiden Federschienen 3 und 4 sind wiederum nur mit einem Teil ihrer Breite von den Nuten 3" und 4'' aufgenommen, so daß sie sich jeweils über einen Teil ihrer Breite frei zwischen den Nuten 9 und 14 bzw. 15 erstrecken.

An der einen, sich in Längsrichtung des Wischblattes 1 erstreckenden Seite geht der Körper 12 in einem über die Unterseite der Abdeckung 11 vorstehenden leistenartigen und sich über die gesamte Länge der Abdeckung 11 erstreckenden Abschnitt 16 über, der bei montierter Abdeckung 11 mit seinem unteren freien Rand 17 bezogen auf eine Ebene senkrecht zur Mittelebene M auf einem gemeinsamen Niveau 18 mit dem oberen, dem Kippsteg 8 zugewandten Bereich der Wischlippe 7 liegt. Im Verwendungsfall ist das Wischblatt 1 so am jeweiligen Fahrzeug montiert, daß die mit dem Abschnitt 16 versehene Längsseite des Wischblattes 1 die in Fahrtrichtung des Fahrzeugs vordere Wischblatt-Längsseite bildet. Der Abschnitt 16 bildet einen vorgesetzten Spoiler, und zwar mit einer außen liegenden, der Wischleiste 2 abgewandten Spoilerfläche 16', die insgesamt gesehen mit einer Ebene senkrecht zur Mittelebene M einen Winkel kleiner als 90° einschließt, der sich zu der Wischleiste 2 hin öffnet und die um Achsen parallel zur Längsachse des Wischblattes konvex gewölbt ist.

An der anderen Längsseite, d.h. im Bereich der Nut 15 bildet die Abdeckung 11 einen wulstförmigen Rand 19.

Die Abdeckung 11 ist aus einem geeigneten, beispielsweise elastischen Material, z.B. aus einem gummielastischen Kunststoff hergestellt, und zwar z.B. durch Extrudieren eines entsprechenden Profils. Grundsätzlich besteht auch die Möglichkeit, die Abdeckung 11 in einem Spritzgießverfahren oder durch Pressen herzustellen, wobei es hier dann auch möglich ist, die Ausnehmung 13 so zu formen, daß sie an den beiden Enden der Abdeckung 11 ebenfalls seitlich verschlossen ist, beispielsweise mit einem dem Rand 19 entsprechenden Rand, so daß die Wischleiste 2 und die Federschienen 3 und 4 bzw. die diese Federschienen an den Wischblattenden verbindenden Mittel dort auch stirnseitig von der Abdeckung 11 abgedeckt sind.

Es versteht sich, daß die Länge der Abdeckung 11 auf jeden Fall so gewählt ist, daß diese das Wischblatt 2 und die Federschienen 3 und 4 auf der gesamten Länge sowie auch die an den Wischblattenden vorgesehenen Verbindungselemente für die Federschienen 3 und 4 abdeckt.

Die Vorteile der Abdeckung 11 sind u.a. folgende:
- Durch die Abdeckung 11 wird eine Verletzungsgefahr an den seitlich über die Wischleiste 2 wegstehenden Federschienen 3 und 4 vermieden;
- durch die Abdeckung 11 wird für das Wischblatt eine strömungstechnisch optimale äußere Kontur erreicht, so daß bei guter Wischqualität des Wischblattes auch störende, bei hohen Fahrgeschwindigkeiten durch den Luftstrom erzeugte Geräusche vermieden sind.;
- durch die Verwendung der Abdeckung 11 ist es weiterhin möglich, die Federschienen 3 und 4 mit einer im Vergleich zur Wischleiste 2 großen Breite auszubilden oder umgekehrt, die Wischleiste 2 sehr schmal und kompakt zu halten, wobei der Querschnitt der Federschienen 3 und 4 in jedem Fall so gewählt werden kann, daß ein optimales Anliegen des Wischblattes 1 gegen die Fahrzeugscheibe und damit eine optimale Wischqualität gewährleistet sind.

Ein weiterer Vorteil des Wischblattes 1 besteht darin, daß durch die Form der Abdeckung 11, insbesondere durch den von dem Abschnitt 16 gebildeten vorgesetzten Spozler, ein besonders niedriger Luftwiderstand erreicht und ein Unterströmen des Wischblattes und eine hiermit verbundene Verschlechterung der Wischqualität verhindert ist.

Die Figur 4 zeigt als weitere mögliche Ausführungsform ein Wischblatt 1a, welches aus der der Wischleiste 2 entsprechenden Wischleiste 2a mit dem Wischleistenkörper 5a und der über den Kippsteg 8 angeformten Wischlippe 7, aus den beiden Federschienen 3 und 4 und aus der Abdeckung 11a besteht. Das Wischblatt 1a unterscheidet sich vom Wischblatt 1 zunächst dadurch, daß der Wischleistenkörper 5a an jeder Längsseite nur die Nut 9 aufweist und die Nuten 9 sowie die den Nuten 14 und 15 an den Seiten der der Ausnehmung 13 entsprechenden Ausnehmung 13a in ihrer Tiefe so gewählt sind, daß die Federschienen 3 und 4 über ihre gesamte Breite von jeweils einer Nut 9 und der benachbarten Nut 14 bzw. 15 aufgenommen sind. Weiterhin ist die Ausnehmung 13a derart an den Querschnitt des Wischleistenkörpers 5a angepaßt, daß letzterer die Ausnehmung 13a vollständig ausfüllt bzw. im wesentlichen vollständig von der Ausnehmung 13a aufgenommen ist.

Bei der Wischleiste 1a ist die Abdeckung 11a an ihrer Oberseite flach ausgeführt und zu den angrenzenden Längsseiten hin abgerundet, wobei die Abdeckung 11a an der im Verwendungsfall in Fahrtrichtung vorderen Längsseite des Wischblattes 1a wiederum den über die Unterseite der Abdeckung vorstehenden leistenartigen Vorsprung 16 mit dem freien Rand 17 bildet.

Die Figur 5 zeigt als weitere Ausführungsform ein Wischblatt 1b, welches dem Wischblatt 1a sehr ähnlich ist und aus der Wischleiste 2b mit dem Wischleistenkörper 5b und der über den Kippsteg 8 angeformten Wischlippe 7, aus den beiden Federschienen 3 und 4 und der Abdeckung 11b besteht. Bei dieser Ausführungsform ist der im Querschnitt rechteckförmige Wischleistenkörper 5b vollständig in der an diesen Querschnitt angepaßten Ausnehmung 13b der Abdeckung 11b aufgenommen. Die Abdeckung 11b bzw. deren Körper 12b weisen ein tropfförmiges Querschnittsprofil, d.h. ein Querschnittsprofil auf, welches dem Profil eines halben Wassertropfens ähnlich ist. Die Außenfläche bzw. Außenkontur der Abdeckung 11b ist asymmetrisch zur Mittelebene M ausgebildet, und zwar um parallel zur Längserstreckung des Wischblattes 1b verlaufende Krümmungsachsen derart, daß an dem in der Figur 5 linken Rand der Krümmungsradius klein ist und ausgehend von diesem linken Rand zur rechten Längsseite hin zunimmt. Die Ausbildung ist weiterhin so getroffen, daß das Verhältnis H/B etwa im Bereich zwischen 1/8 und 1/4 liegt, wobei B die maximale Breite ist, die die Abdeckung 11b in der Achsrichtung senkrecht zur Mittelbene M aufweist, und H die maximale Höhe bzw. der maximale Abstand zwischen der Ebene der Unterseiten der Federschienen 3 bzw. 4 und der Oberseite der Abdeckung 11b ist. Die Federschienen 3 und 4 liegen mit ihren Oberflächenseiten wiederum in gemeinsamen Ebenen senkrecht zur Mittelebene M.

Wie die Figur 5 auch zeigt, schließt die Abdeckung 11b im Bereich der in dieser Figur rechten Längsseite, d.h. im Bereich der Federschiene 4 bündig mit der Unterseite 6b der Wischleiste 2b ab, während an der gegenüberliegenden Längsseite, d.h. im Bereich der Federschiene 3 die Abdeckung 11b einen über die Unterseite 6b vorstehenden, sich über die gesamte Länge der Abdeckung 11b erstreckenden Abschnitt 16b bildet. Dieser liegt mit seinem unteren freien Rand wiederum - bezogen auf eine Ebene senkrecht zur Mittelebene M - niveaugleich mit dem oberen Bereich der Wischlippe 7 und ergänzt die Tropfenform der Abdeckung 11b an dieser Längsseite. Im Verwendungfall befindet sich der Abschnitt 16b an der in Fahrtrichtung vorderen Wischblatt-Längsseite.

Das Wischblatt 1b hat durch die beschriebene Formgebung der Abdeckung 1b den Vorteil einen besonders niedrigen Strömungswiderstand, wobei auch Windgeräusche stark reduziert werden. Zur weiteren Reduzierung der Windgeräusche kann die umströmte Oberfläche auch mit kleinen zusätzlichen Erhebungen, beispielsweise in der Größenordnung von 0,1 - 2 mm versehen sein.

Die Figur 6 zeigt als weitere mögliche Ausführungsform ein Wischblatt 1c, welches sich von dem Wischblatt 1b im wesentlichen nur dadurch unterscheidet, daß anstelle der Abdeckung 11b mit der Tropfenformkontur eine Abdeckung 11c vorgesehen ist, deren Körper 12c als Spoiler mit einer Spoilerfläche 20 ausgeführt ist. Wie in der Figur 6 mit unterbrochenen Linien dargestellt ist, besteht die Möglichkeit, die Abdeckung 11c an derjenigen Längsseite, an der die Spoilerfläche 20 den geringsten Abstand von der zu reinigenden Fahrzeugscheibe aufweist und die bezogen auf die Fahrtrichtung die vordere Wischblatt-Längsseite bildet, wiederum mit dem nach unten überstehenden Abschnitt 16 zu versehen.

Durch die spoilerartige Ausbildung der Abdeckung 11c wird zwar der Luftwiderstand des Wischblattes 1c etwas vergrößert, diese Formgebung der Abdeckung 11c hat aber den Vorteil, daß das Hochgeschwindigkeitsverhalten der Wischleiste 1c insgesamt wesentlich verbessert wird.

Die Figur 7 zeigt in vereinfachter Darstellung und in Draufsicht eine Federschiene 21, welche von einer Länge eines federnden Flachmaterials, nämlich beispielsweise eines Federbandstahls gebildet und in geeigneter Weise, beispielsweise durch Stanzen mit einem Schlitz 22 versehen ist, der an den beiden Enden der Federschiene 21 geschlossen ist. An einem Ende der Federschiene weist der Schlitz 22 eine Erweiterung zur Bildung einer Einführöffnung 23 auf.

Die Breite des Schlitzes 22 (außerhalb der Einführöffnung 23) entspricht dem Abstand, den in den Figuren 3 - 6 die innenliegenden Längskanten 3' und 4' der Federschienen 3 und 4 aufweisen. Im Bereich der Einführöffnung 23 besitzt der Schlitz 22 in Richtung senkrecht zur seiner Längserstreckung eine Breite, die in etwa gleich der Breite der jeweiligen Wischleiste 2 - 2c ist, so daß die jeweilige Wischleiste durch Einfädeln über die Öffnung 23 an der Federschiene 21 derart befestigt werden kann, daß die beidseitig vom Schlitz 22 vorgesehenen Abschnitte 21' der Federschiene 21 in die Nuten 9 und 14 bzw. 15 eingreifen, wie dies vorstehend für die Federschienen 3 bzw. 4 beschrieben wurde.

Die Federschiene 21 ist für die Wischblätter 1 - 1c anstelle von einzelnen Federschienen 3 und 4 verwendbar. Grundsätzlich ist die Federschiene 21 aber auch bei anderen Wischblättern einsetzbar, die aus einer Wischleiste und zwei in seitliche Nuten der Wischleiste eingreifenden Federschienen bestehen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1, 1a, 1b, 1c: Wischblatt
- 2, 2a, 2b, 2c: Wischleiste
- 3, 4: Federschiene
- 3', 4'; 3'', 4'': Federschienenlängsseite
- 5, 5a, 5b, 5c: Wischleistenkörper
- 5': Abschnitt
- 6, 6b: Wischleistenunterseite
- 7: Wischlippe
- 8: Kippsteg
- 9, 10: Nut
- 11, 11a, 11b, 11c: Abdeckung
- 12, 12a, 12b, 12c: Abdeckungskörper
- 13, 13a, 13b, 13c: Ausnehmung
- 13': Vertiefung
- 14, 15: Nut
- 16, 16b: leistenartiger Vorsprung
- 16': Spoilerfläche
- 17: Rand
- 18: Niveau
- 19: Rand
- 20: Spoilerfläche
- 21: Federschiene
- 21': Abschnitt
- 22: Schlitz
- 23: Einführöffnung

- 101: Wischblatt
- 102: Wischgummi
- 103: Wischlippe
- 104: Rückenteil
- 105: Kippsteg
- 107: Trageelement
- 108: Ummantelung
- 109: Ansicht
- 112: Teil Wischlippe
- 113: kugelsegmentförmige Vertiefungen
- 114: Richtung Federung (103)
- 117: Hohlraum
- 118: Wandstärke

## Patentansprüche (Patentansprüche für folgende(n) Vertragsstaat(en): DE, ES, GB)

1. Wischblatt (101) für eine Wischeinrichtung zum Wischen von Scheiben von Fahrzeugen mit einem Wischgummi (102), das eine der Scheibe zugewandte Wischlippe (103), ein der Scheibe abgewandtes Rückenteil (104) und einen die Wischlippe (103) mit dem Rückenteil (104) verbindenden Kippsteg (105) aufweist, mit einem das Wischgummi (102) stabilisierenden, bandartigen, federelastischen Trageelement (107), welches mit einem quer zu der Längserstreckung des Wischblattes antreibbaren, zur Scheibe belastbaren Wischarm verbindbar ist und mit einer das Rückenteil (104) und das Trageelement (107) wenigstens abschnittsweise umgebenden Ummantelung (108), welche strömungsgünstig ausgebildet ist, in Längserstreckung des Wischblattes (101) das Trageelement (107) und das Rückenteil (104) umschließt und die der Wischlippe (103) abgewandte Oberseite des Rückenteiles (104) abdeckt und weiterhin in zu der Scheibe paralleler, auf die Längserstreckung des Wischblattes (101) gerichteter Ansicht, die der Strömungsrichtung (109) entspricht, den Kippsteg (105) abdeckt.

2. Wischblatt (101) nach Anspruch 1, wobei die Ummantelung (108) auch den der Scheibe abgewandten Teil (112) der Wischlippe (103) abdeckt.

3. Wischblatt (101) nach Anspruch 1 und 2, wobei die Ummantelung (108) einen weitgehend elliptischen Querschnitt aufweist.

4. Wischblatt (101) nach einem der vorhergehenden Ansprüche, wobei die Ummantelung (108) wenigstens abschnittsweise eine Oberflächenstrukturierung zur Reduzierung des Luftwiderstandes aufweist.

5. Wischblatt (101) nach Anspruch 4, wobei die Oberflächenstrukturierung kugelsegmentförmige Vertiefungen (113) aufweist.

6. Wischblatt (101) nach einem der vorhergehenden Ansprüche, wobei die Ummantelung (108) an der Luvseite einen Turbulator aufweist.

7. Wischblatt (101) nach einem der vorhergehenden Ansprüche, wobei die Wischlippe (103) mit Kippsteg (105) in orthogonal zur Scheibe verlaufender Richtung federnd angeordnet ist.

8. Wischblatt (101) nach Anspruch 7, wobei zur federnden Anordnung der Wischlippe (103) das Rückenteil (104) einen Membranbereich aufweist.

9. Wischblatt (101) nach Anspruch 8, wobei der Membranbereich durch wenigstens einen in dem Rückenteil (104) vorhandenen Hohlraum (117) gebildet wird.

10. Wischblatt (101) nach Anspruch 9, wobei die Wandstärke (18) zwischen dem Hohlraum (117) und der der Wischlippe (103) zugewandten Seite des Rückenteils (104) etwa der Wandstärke des Kippsteges (105) entspricht.

11. Wischblatt (101) nach einem der vorhergehenden Ansprüche, wobei die Ummantelung (108) eine Eigenstabilität aufweist, die das Wischblatt (1) in seiner Gesamtheit stabilisiert und einer plastischen Verformung des Trageelements (107) entgegenwirkt.

12. Wischblatt (101) nach einem der vorhergehenden Ansprüche, wobei die Ummantelung (108) auch die freien Enden des Trageelements (107) und des Rückenteils (104) umschließt.

13. Wischblatt (101) nach den Ansprüchen 1-11, wobei die Ummantelung (108) an ihren freien Enden Abdeckkappen aufweist.

14. Wischblatt (101) nach einem der vorhergehenden Ansprüche, wobei die dem Rückenteil (104) zugewandte Seite des Trageelements (107) mit der dem Trageelement (107) zugewandten Seite des Rückenteils (104) verklebt ist.

15. Wischblatt (101) nach einem der vorhergehenden Ansprüche, wobei das Trageelement (104) ein Metallfederelement und dass die Ummantelung (108) ein Kunststoffelement ist.

16. Wischblatt (101) nach einem der vorhergehenden Ansprüche, wobei das Trageelement (104) beschichtet, insbesondere kunststoffbeschichtet, ist.

17. Wischblatt (1) zum Reinigen von Scheiben an Fahrzeugen, insbesondere Kraftfahrzeugen, mit einer aus einem gummielastischen Material hergestellten langgestreckten Wischleiste (2), die im Bereich ihrer Unterseite einstückig mit wenigstens einer an der jeweiligen Fahrzeugscheibe anlegbaren Wischlippe (7) hergestellt ist, sowie mit wenigstens einer sich in Längsrichtung der Wischleiste (2, 2a, 2b, 2c) erstreckenden und an dieser gehaltenen Federschiene (3, 4, 21), die mit wenigstens einer außen liegenden Längskante (3'', 4'') über eine Längsseite der Wischleiste vorsteht, wobei an der wenigstens einen Federschiene (3, 4) eine die Wischleiste (2, 2a, 2b, 2c) an ihrer der Wischlippe (7) abgewandten Oberseite abdeckende Abdeckung (11, 11a, 11b, 11c) gehalten ist, welche strömungsgünstig ausgebildet ist und in zu der Scheibe paralleler, auf die Längserstreckung des Wischblattes (1) gerichteter Ansicht, die der Strömungsrichtung (109) entspricht, einen die Wischlippe (7) mit einem Wischleistenkörper (5) verbindenden Kippsteg (8) abdeckt.

18. Wischblatt nach Anspruch 17, wobei die Abdeckung (11, 11a, 11b, 11c) auch die wenigstens eine Federschiene abdeckt.

19. Wischblatt nach einem der vorhergehenden Ansprüche, wobei die Abdeckung (11, 11a, 11b, 11c) durch Einrasten an der wenigstens einen Federschiene (3,4 ; 21) gehalten ist.

20. Wischblatt nach einem der vorhergehenden Ansprüche, wobei die Abdeckung (11, 11a, 11b, 11c) Ausnehmungen (14,15) aufweist, in die die wenigstens eine Federschiene (3,4 ; 21) mit ihren außen liegenden Längskanten (3'', 4'') eingreift.

21. Wischblatt nach einem der vorhergehenden Ansprüche, wobei die Abdeckung an ihrer der Unterseite der Wischleiste (2,2a, 2b, 2c) zugewandten Unterseite mit einer Ausnehmung (13,13a, 13b, 13c) versehen ist, in der die Wischleiste (2,2a, 2b, 2c) zumindest teilweise aufgenommen ist.

22. Wischblatt nach einem der vorhergehenden Ansprüche, wobei zwei getrennte Federschienen (3,4) vorgesehen sind, von denen jede in eine längsseitige Nut (9) der Wischleiste (2,2a, 2b, 2c) eingreift und aus dieser Nut über die betreffende Seite der Wischleiste vorsteht.

23. Wischblatt nach einem der vorhergehenden Ansprüche 17 21, wobei eine einzige Federschiene (21) vorgesehen ist, die mit zwei Längskanten jeweils über eine Längsseite der Wischleiste (2,2a, 2b, 2c) vorsteht, und dass die Abdeckung (11, 11a, 11b, 11c) an beiden Längskanten der Federschiene (21) gehalten ist.

24. Wischblatt nach Anspruch 23, wobei die Federschiene (21) beidseitig von wenigstens einem Schlitz (22) Federschienenabschnitte (21') bildet.

25. Wischblatt nach Anspruch 24, wobei die Federschienenabschnitte (21') jeweils in einer längsseitigen Nut (9) der Wischleiste (2,2a, 2b, 2c) aufgenommen sind, und dass der Schlitz (22) der Federschiene (21) vom Material der Wischleiste (2,2a, 2b, 2c) zumindest teilweise eingenommen ist.

26. Wischblatt nach einem der vorhergehenden Ansprüche, wobei die Abdeckung (11) haubenartig, vorzugsweise mit einer konvex gekrümmten Oberseite ausgebildet ist.

27. Wischblatt nach einem der vorhergehenden Ansprüche, wobei die Abdeckung (11b) im Querschnitt eine einer Tropfenform oder einem Teil einer Tropfenform entsprechende Außenkontur aufweist.

28. Wischblatt nach einem der vorhergehenden Ansprüche 17 - 26, wobei die Abdeckung (11c) an ihrer Oberseite als Spoiler mit wenigstens einer Spoilerfläche (20) ausgebildet ist.

29. Wischblatt nach einem der vorhergehenden Ansprüche, wobei die Abdeckung (11, 11b, 11c) an wenigstens einer Längsseite des Wischblattes (1, 1b, 1c) einen über die Unterseite der Abdeckung wegstehenden leistenartigen Abschnitt (16,16a, 16b) aufweist.

30. Wischblatt nach Anspruch 29, wobei der leistenartige Abschnitt (16) an einer der Wischleiste abgewandten Außenfläche als Spoiler ausgebildet bzw. mit einer Spoilerfläche (16') versehen ist.

31. Wischblatt nach einem der vorhergehenden Ansprüche, wobei die Abdeckung (11, 11a, 11b, 11c) aus einem elastischen Material, beispielsweise aus elastischen Kunststoff hergestellt ist.

## Patentansprüche (Patentansprüche für folgende(n) Vertragsstaat(en): FR, IT)

1. Wischblatt (101) für eine Wischeinrichtung zum Wischen von Scheiben von Fahrzeugen mit einem Wischgummi (102), das eine der Scheibe zugewandte Wischlippe (103), ein der Scheibe abgewandtes Rückenteil (104) und einen die Wischlippe (103) mit dem Rückenteil (104) verbindenden Kippsteg (105) aufweist, mit einem das Wischgummi (102) stabilisierenden, bandartigen, federelastischen Trageelement (107), welches mit einem quer zu der Längserstreckung des Wischblattes antreibbaren, zur Scheibe belastbaren Wischarm verbindbar ist und mit einer das Rückenteil (104) und das Trageelement (107) wenigstens abschnittsweise umgebenden Ummantelung (108), wobei die Ummantelung (108) strömungsgünstig ausgebildet ist und in Längserstreckung des Wischblattes (101) das Trageelement (107) und das Rückenteil (104) umschließt, **dadurch gekennzeichnet, dass** die Ummantelung (108) in zu der Scheibe paralleler, auf die Längserstreckung des Wischblattes (101) gerichteter Ansicht, die der Strömungsrichtung (109) entspricht, den Kippsteg (105) abdeckt.

2. Wischblatt (101) nach Anspruch 1, **dadurch gekennzeichnet, dass** die Ummantelung (108) auch den der Scheibe abgewandten Teil (112) der Wischlippe (103) abdeckt.

3. Wischblatt (101) nach Anspruch 1 und 2, **dadurch gekennzeichnet, dass** die Ummantelung (108) einen weitgehend elliptischen Querschnitt aufweist.

4. Wischblatt (101) nach einem der vorhergehenden Ansprüche, **dadurch gekennzeichnet, dass** die Ummantelung (108) wenigstens abschnittsweise eine Oberflächenstrukturierung zur Reduzierung des Luftwiderstandes aufweist.

5. Wischblatt (101) nach Anspruch 4, **dadurch gekennzeichnet, dass** die Oberflächenstrukturierung kugelsegmentförmige Vertiefungen (113) aufweist.

6. Wischblatt (101) nach einem der vorhergehenden Ansprüche, **dadurch gekennzeichnet, dass** die Ummantelung (108) an der Luvseite einen Turbulator aufweist.

7. Wischblatt (101) nach einem der vorhergehenden Ansprüche, **dadurch gekennzeichnet, dass** die Wischlippe (103) mit Kippsteg (105) in orthogonal zur Scheibe verlaufender Richtung federnd angeordnet ist.

8. Wischblatt (101) nach Anspruch 7, **dadurch gekennzeichnet, dass** zur federnden Anordnung der Wischlippe (103) das Rückenteil (104) einen Membranbereich aufweist.

9. Wischblatt (101) nach Anspruch 8, **dadurch gekennzeichnet, dass** der Membranbereich durch wenigstens einen in dem Rückenteil (104) vorhandenen Hohlraum (117) gebildet wird.

10. Wischblatt (101) nach Anspruch 9, **dadurch gekennzeichnet, dass** die Wandstärke (18) zwischen dem Hohlraum (117) und der der Wischlippe (103) zugewandten Seite des Rückenteils (104) etwa der Wandstärke des Kippsteges (105) entspricht.

11. Wischblatt (101) nach einem der vorhergehenden Ansprüche, **dadurch gekennzeichnet, dass** die Ummantelung (108) eine Eigenstabilität aufweist, die das Wischblatt (1) in seiner Gesamtheit stabilisiert und einer plastischen Verformung des Trageelements (107) entgegenwirkt.

12. Wischblatt (101) nach einem der vorhergehenden Ansprüche, **dadurch gekennzeichnet, dass** die Ummantelung (108) auch die freien Enden des Trageelements (107) und des Rückenteils (104) umschließt.

13. Wischblatt (101) nach den Ansprüchen 1-11, **dadurch gekennzeichnet, dass** die Ummantelung (108) an ihren freien Enden Abdeckkappen aufweist.

14. Wischblatt (101) nach einem der vorhergehenden Ansprüche, **dadurch gekennzeichnet, dass** die dem Rückenteil (104) zugewandte Seite des Trageelements (107) mit der dem Trageelement (107) zugewandten Seite des Rückenteils (104) verklebt ist.

15. Wischblatt (101) nach einem der vorhergehenden Ansprüche, **dadurch gekennzeichnet, dass** das Trageelement (104) ein Metallfederelement und dass die Ummantelung (108) ein Kunststoffelement ist.

16. Wischblatt (101) nach einem der vorhergehenden Ansprüche, **dadurch gekennzeichnet**, das Trageelement (104) beschichtet, insbesondere kunststoffbeschichtet, ist.

17. Wischblatt (1) zum Reinigen von Scheiben an Fahrzeugen, insbesondere Kraftfahrzeugen, mit einer aus einem gummielastischen Material hergestellten langgestreckten Wischleiste (2), die im Bereich ihrer Unterseite einstückig mit wenigstens einer an der jeweiligen Fahrzeugscheibe anlegbaren Wischlippe (7) hergestellt ist, sowie mit wenigstens einer sich in Längsrichtung der Wischleiste (2, 2a, 2b, 2c) erstreckenden und an dieser gehaltenen Federschiene (3, 4, 21), die mit wenigstens einer außen liegenden Längskante (3'', 4'') über eine Längsseite der Wischleiste vorsteht, wobei an der wenigstens einen Federschiene (3, 4) eine strömungsgünstig ausgebildete und die Wischleiste (2, 2a, 2b, 2c) an ihrer der Wischlippe (7) abgewandten Oberseite abdeckende Abdeckung (11, 11a, 11b, 11c) gehalten ist, **dadurch gekennzeichnet, dass** die Abdeckung (11, 11a, 11b, 11c) in zu der Scheibe paralleler, auf die Längserstreckung des Wischblattes (1) gerichteter Ansicht, die der Strömungsrichtung (109) entspricht, einen die Wischlippe (7) mit einem Wischleistenkörper (5) verbindenden Kippsteg (8) abdeckt.

18. Wischblatt nach Anspruch 17, **dadurch gekennzeichnet, dass** die Abdeckung (11, 11a, 11b, 11c) auch die wenigstens eine Federschiene abdeckt.

19. Wischblatt nach einem der vorhergehenden Ansprüche, **dadurch gekennzeichnet, dass** die Abdeckung (11, 11a, 11b, 11c) durch Einrasten an der wenigstens einen Federschiene (3,4 ; 21) gehalten ist.

20. Wischblatt nach einem der vorhergehenden Ansprüche, **dadurch gekennzeichnet, dass** die Abdeckung (11, 11a, 11b, 11c) Ausnehmungen (14,15) aufweist, in die die wenigstens eine Federschiene (3,4 ; 21) mit ihren außen liegenden Längskanten (3'', 4'') eingreift.

21. Wischblatt nach einem der vorhergehenden Ansprüche, **dadurch gekennzeichnet, dass** die Abdeckung an ihrer der Unterseite der Wischleiste (2,2a, 2b, 2c) zugewandten Unterseite mit einer Ausnehmung (13,13a, 13b, 13c) versehen ist, in der die Wischleiste (2,2a, 2b, 2c) zumindest teilweise aufgenommen ist.

22. Wischblatt nach einem der vorhergehenden Ansprüche, **dadurch gekennzeichnet, dass** zwei getrennte Federschienen (3,4) vorgesehen sind, von denen jede in eine längsseitige Nut (9) der Wischleiste (2,2a, 2b, 2c) eingreift und aus dieser Nut über die betreffende Seite der Wischleiste vorsteht.

23. Wischblatt nach einem der vorhergehenden Ansprüche 17 21, **dadurch gekennzeichnet, dass** eine einzige Federschiene (21) vorgesehen ist, die mit zwei Längskanten jeweils über eine Längsseite der Wischleiste (2,2a, 2b, 2c) vorsteht, und dass die Abdeckung (11, 11a, 11b, 11c) an beiden Längskanten der Federschiene (21) gehalten ist.

24. Wischblatt nach Anspruch 23, **dadurch gekennzeichnet, dass** die Federschiene (21) beidseitig von wenigstens einem Schlitz (22) Federschienenabschnitte (21') bildet.

25. Wischblatt nach Anspruch 24, **dadurch gekennzeichnet, dass** die Federschienenabschnitte (21') jeweils in einer längsseitigen Nut (9) der Wischleiste (2,2a, 2b, 2c) aufgenommen sind, und dass der Schlitz (22) der Federschiene (21) vom Material der Wischleiste (2,2a, 2b, 2c) zumindest teilweise eingenommen ist.

26. Wischblatt nach einem der vorhergehenden Ansprüche, **dadurch gekennzeichnet, dass** die Abdeckung (11) haubenartig, vorzugsweise mit einer konvex gekrümmten Oberseite ausgebildet ist.

27. Wischblatt nach einem der vorhergehenden Ansprüche, **dadurch gekennzeichnet, dass** die Abdeckung (11b) im Querschnitt eine einer Tropfenform oder einem Teil einer Tropfenform entsprechende Außenkontur aufweist.

28. Wischblatt nach einem der vorhergehenden Ansprüche 17 - 25, **dadurch gekennzeichnet, dass** die Abdeckung (11c) an ihrer Oberseite als Spoiler mit wenigstens einer Spoilerfläche (20) ausgebildet ist.

29. Wischblatt nach einem der vorhergehenden Ansprüche, **dadurch gekennzeichnet, dass** die Abdeckung (11, 11b, 11c) an wenigstens einer Längsseite des Wischblattes (1, 1b, 1c) einen über die Unterseite der Abdeckung wegstehenden leistenartigen Abschnitt (16,16a, 16b) aufweist.

30. Wischblatt nach Anspruch 29, **dadurch gekennzeichnet, dass** der leistenartige Abschnitt (16) an einer der Wischleiste abgewandten Außenfläche als Spoiler ausgebildet bzw. mit einer Spoilerfläche (16') versehen ist.

31. Wischblatt nach einem der vorhergehenden Ansprüche, **dadurch gekennzeichnet, dass** die Abdeckung (11, 11a, 11b, 11c) aus einem elastischen Material, beispielsweise aus elastischen Kunststoff hergestellt ist.

## Claims (Claims for the following Contracting State(s): DE, ES, GB)

1. Wiper blade (101) for a wiping device for wiping vehicle windows, having a wiper rubber (102), which has a wiper lip (103) facing the glass, a back part (104) facing away from the glass and a hinge (105) connecting the wiper lip (103) to the back part (104), having a strip-like, resiliently flexible supporting element (107) which stabilizes the wiper rubber (102) and can be connected to a wiper arm that can be driven transversely to the longitudinal extension of the wiper blade and is biased towards the glass, and having a casing (108) enclosing the back part (104) and the supporting element (107) at least in sections, which casing (108) is aerodynamically shaped, encloses the supporting element (107) and the back part (104) in the longitudinal extension of the wiper blade (101) and covers the upper side of the back part (104) facing away from the wiper lip (103) and, furthermore, when seen in a view directed parallel to the window along the longitudinal extension of the wiper blade (101), said view corresponding to the direction of the flow of air (109), covers the hinge (105).

2. Wiper blade (101) according to Claim 1, wherein the casing (108) also covers the part (112) of the wiper lip (103) facing away from the glass.

3. Wiper blade (101) according to Claims 1 and 2, wherein the casing (108) has a largely elliptical cross section.

4. Wiper blade (101) according to one of the preceding claims, wherein the casing (108) at least in sections has surface texturing to reduce aerodynamic drag.

5. Wiper blade (101) according to Claim 4, wherein the surface texturing has spherical segment-shaped dimples (113).

6. Wiper blade (101) according to one of the preceding claims, wherein the casing (108) has a turbulence generator on the windward side.

7. Wiper blade (101) according to one of the preceding claims, wherein the wiper lip (103) with hinge (105) is located to flex in a direction running orthogonally to the glass.

8. Wiper blade (101) according to Claim 7, wherein the back part (104) has a membrane area to locate the wiper lip (103) flexibly.

9. Wiper blade (101) according to Claim 8, wherein the membrane area is formed by at least one cavity (117) present in the back part (104).

10. Wiper blade (101) according to Claim 9, wherein the wall thickness (118) between the cavity (117) and the side of the back part (104) facing the wiper lip (103) corresponds roughly to the wall thickness of the hinge (105).

11. Wiper blade (101) according to one of the preceding claims, wherein the casing (108) possesses intrinsic stability which stabilizes the wiper blade (1) in its entirety and counteracts any plastic deformation of the supporting element (107).

12. Wiper blade (101) according to one of the preceding claims, wherein the casing (108) also encloses the free ends of the supporting element (107) and of the back part (104).

13. Wiper blade (101) according to Claims 1-11, wherein the casing (108) has end caps at its free ends.

14. Wiper blade (101) according to one of the preceding claims, wherein the side of the supporting element (107) facing the back part (104) is bonded to the side of the back part (104) facing the supporting element (107).

15. Wiper blade (101) according to one of the preceding claims, wherein the supporting element (104) is a metallic spring element and the casing (108) is a plastic element.

16. Wiper blade (101) according to one of the preceding claims, wherein the supporting element (104) is coated, specifically plastic-coated.

17. Wiper blade (1) for cleaning windows on vehicles, specifically motor vehicles, having an elongate wiper strip (2) of a flexible rubber material which is produced in a single piece in the area of its underside with at least one wiper lip (7) which can be pressed against the vehicle window, as well as with at least one spline (3, 4, 21) extending in the longitudinal direction of the wiper strip (2, 2a, 2b, 2c) and retained against said strip, said spline projecting with at least one outwardly lying longitudinal edge (3'', 4'') beyond one longitudinal side of the wiper strip, wherein a cover (11, 11a, 11b, 11c) which covers the wiper strip (2, 2a, 2b, 2c) on its upper side facing away from the wiper lip (7) is retained on the at least one spline (3, 4), which cover is aerodynamically shaped and, when seen in a view directed parallel to the window along the longitudinal extension of the wiper blade (1), covers a hinge (8) connecting the wiper lip (7) to a wiper strip body (5).

18. Wiper blade according to Claim 17, wherein the cover (11, 11a, 11b, 11c) also covers the at least one spline.

19. Wiper blade according to one of the preceding claims, wherein the cover (11, 11a, 11b, 11c) is retained by latching onto the at least one spline (3, 4; 21).

20. Wiper blade according to one of the preceding claims, wherein the cover (11, 11a, 11b, 11c) has recesses (14, 15) into which the at least one spline (3, 4; 21) engages with its outwardly lying longitudinal edges (3", 4'').

21. Wiper blade according to one of the preceding claims, wherein the cover is furnished on its underside facing the underside of the wiper strip (2, 2a, 2b, 2c) with a concavity (13, 13a, 13b, 13c) in which the wiper strip (2, 2a, 2b, 2c) is at least partially accommodated.

22. Wiper blade according to one of the preceding claims, wherein two separate splines (3, 4) are provided, each of which engages in a longitudinal groove (9) in the wiper strip (2, 2a, 2b, 2c) and projects from this groove beyond the specific side of the wiper strip.

23. Wiper blade according to one of the preceding Claims 17-21, wherein a single spline (21) is provided, which projects with each of two longitudinal edges beyond a longitudinal side of the wiper strip (2, 2a, 2b, 2c), and wherein the cover (11, 11a, 11b, 11c) is retained on both longitudinal edges of the spline (21).

24. Wiper blade according to Claim 23, wherein the spline (21) forms spline sections (21') on both sides of at least one slot (22).

25. Wiper blade according to Claim 24, wherein the spline sections (21') are each accommodated in a longitudinal groove (9) in the wiper strip (2, 2a, 2b, 2c), and wherein the slot (22) in the spline (21) is at least partially occupied by the material of the wiper strip (2, 2a, 2b, 2c).

26. Wiper blade according to one of the preceding claims, wherein the cover (11) is configured like a cap, preferably with a convexly curved upper side.

27. Wiper blade according to one of the preceding claims, wherein the cover (11b) has an external contour corresponding in cross section to a teardrop or to part of a teardrop.

28. Wiper blade according to one of the preceding Claims 17-26, wherein the cover (11c) is configured on its upper side as a spoiler with at least one spoiler surface (20).

29. Wiper blade according to one of the preceding claims, wherein the cover (11, 11b, 11c) has a strip-like section (16, 16a, 16b) on at least one longitudinal side of the wiper blade (1, 1b, 1c), which strip-like section projects beyond the underside of the cover.

30. Wiper blade according to Claim 29, wherein the strip-like section (16) is configured as a spoiler on an outer surface facing away from the wiper strip or is furnished with a spoiler surface (16').

31. Wiper blade according to one of the preceding claims, wherein the cover (11, 11a, 11b, 11c) is produced from a flexible material, for example from flexible plastic.

## Claims (Claims for the following Contracting State(s): FR, IT)

1. Wiper blade (101) for a wiping device for wiping vehicle windows, having a wiper rubber (102), which has a wiper lip (103) facing the glass, a back part (104) facing away from the glass and a hinge (105) connecting the wiper lip (103) to the back part (104), having a strip-like, resiliently flexible supporting element (107) which stabilizes the wiper rubber (102) and can be connected to a wiper arm that can be driven transversely to the longitudinal extension of the wiper blade and is biased towards the glass, and having a casing (108) enclosing the back part (104) and the supporting element (107) at least in sections, wherein the casing (108) is aerodynamically shaped and encloses the supporting element (107) and the back part (104) in the longitudinal extension of the wiper blade (101), **characterized in that**, when seen in a view directed parallel to the window along the longitudinal extension of the wiper blade (101), said view corresponding to the direction of the flow of air (109), the casing (108) covers the hinge (105).

2. Wiper blade (101) according to Claim 1, **characterized in that** the casing (108) also covers the part (112) of the wiper lip (103) facing away from the glass.

3. Wiper blade (101) according to Claims 1 and 2, **characterized in that** the casing (108) has a largely elliptical cross section.

4. Wiper blade (101) according to one of the preceding claims, **characterized in that** the casing (108) at least in sections has surface texturing to reduce aerodynamic drag.

5. Wiper blade (101) according to Claim 4, **characterized in that** the surface texturing has spherical segment-shaped dimples (113).

6. Wiper blade (101) according to one of the preceding claims, **characterized in that** the casing (108) has a turbulence generator on the windward side.

7. Wiper blade (101) according to one of the preceding claims, **characterized in that** the wiper lip (103) with hinge (105) is located to flex in a direction running orthogonally to the glass.

8. Wiper blade (101) according to Claim 7, **characterized in that** the back part (104) has a membrane area to locate the wiper lip (103) flexibly.

9. Wiper blade (101) according to Claim 8, **characterized in that** the membrane area is formed by at least one cavity (117) present in the back part (104).

10. Wiper blade (101) according to Claim 9, **characterized in that** the wall thickness (118) between the cavity (117) and the side of the back part (104) facing the wiper lip (103) corresponds roughly to the wall thickness of the hinge (105).

11. Wiper blade (101) according to one of the preceding claims, **characterized in that** the casing (108) possesses intrinsic stability which stabilizes the wiper blade (1) in its entirety and counteracts any plastic deformation of the supporting element (107).

12. Wiper blade (101) according to one of the preceding claims, **characterized in that** the casing (108) also encloses the free ends of the supporting element (107) and of the back part (104).

13. Wiper blade (101) according to Claims 1-11, **characterized in that** the casing (108) has end caps at its free ends.

14. Wiper blade (101) according to one of the preceding claims, **characterized in that** the side of the supporting element (107) facing the back part (104) is bonded to the side of the back part (104) facing the supporting element (107).

15. Wiper blade (101) according to one of the preceding claims, **characterized in that** the supporting element (104) is a metallic spring element and the casing (108) is a plastic element.

16. Wiper blade (101) according to one of the preceding claims, **characterized in that** the supporting element (104) is coated, specifically plastic-coated.

17. Wiper blade (1) for cleaning windows on vehicles, specifically motor vehicles, having an elongate wiper strip (2) of a flexible rubber material which is produced in a single piece in the area of its underside with at least one wiper lip (7) which can be pressed against the vehicle window, as well as with at least one spline (3, 4, 21) extending in the longitudinal direction of the wiper strip (2, 2a, 2b, 2c) and retained against said strip, said spline projecting with at least one outwardly lying longitudinal edge (3'', 4'') beyond one longitudinal side of the wiper strip, wherein a cover (11, 11a, 11b, 11c) which is aerodynamically shaped and covers the wiper strip (2, 2a, 2b, 2c) on its upper side facing away from the wiper lip (7) is retained on the at least one spline (3, 4), **characterized in that**, when seen in a view directed parallel to the window along the longitudinal extension of the wiper blade (1), the cover (11, 11a, 11b, 11c) covers a hinge (8) connecting the wiper lip (7) to a wiper strip body (5).

18. Wiper blade according to Claim 17, **characterized in that** the cover (11, 11a, 11b, 11c) also covers the at least one spline.

19. Wiper blade according to one of the preceding claims, **characterized in that** the cover (11, 11a, 11b, 11c) is retained by latching onto the at least one spline (3, 4; 21).

20. Wiper blade according to one of the preceding claims, **characterized in that** the cover (11, 11a, 11b, 11c) has recesses (14, 15) into which the at least one spline (3, 4; 21) engages with its outwardly lying longitudinal edges (3'', 4'').

21. Wiper blade according to one of the preceding claims, **characterized in that** the cover is furnished on its underside facing the underside of the wiper strip (2, 2a, 2b, 2c) with a concavity (13, 13a, 13b, 13c) in which the wiper strip (2, 2a, 2b, 2c) is at least partially accommodated.

22. Wiper blade according to one of the preceding claims, **characterized in that** two separate splines (3, 4) are provided, each of which engages in a longitudinal groove (9) in the wiper strip (2, 2a, 2b, 2c) and projects from this groove beyond the specific side of the wiper strip.

23. Wiper blade according to one of the preceding Claims 17-21, **characterized in that** a single spline (21) is provided, which projects with each of two longitudinal edges beyond a longitudinal side of the wiper strip (2, 2a, 2b, 2c), and **in that** the cover (11, 11a, 11b, 11c) is retained on both longitudinal edges of the spline (21).

24. Wiper blade according to Claim 23, **characterized in that** the spline (21) forms spline sections (21') on both sides of at least one slot (22).

25. Wiper blade according to Claim 24, **characterized in that** the spline sections (21') are each accommodated in a longitudinal groove (9) in the wiper strip (2, 2a, 2b, 2c), and **in that** the slot (22) in the spline (21) is at least partially occupied by the material of the wiper strip (2, 2a, 2b, 2c).

26. Wiper blade according to one of the preceding claims, **characterized in that** the cover (11) is configured like a cap, preferably with a convexly curved upper side.

27. Wiper blade according to one of the preceding claims, **characterized in that** the cover (11b) has an external contour corresponding in cross section to a teardrop or to part of a teardrop.

28. Wiper blade according to one of the preceding Claims 17-25, **characterized in that** the cover (11c) is configured on its upper side as a spoiler with at least one spoiler surface (20).

29. Wiper blade according to one of the preceding claims, **characterized in that** the cover (11, 11b, 11c) has a strip-like section (16, 16a, 16b) on at least one longitudinal side of the wiper blade (1, 1b, 1c), which strip-like section projects beyond the underside of the cover.

30. Wiper blade according to Claim 29, **characterized in that** the strip-like section (16) is configured as a spoiler on an outer surface facing away from the wiper strip or is furnished with a spoiler surface (16').

31. Wiper blade according to one of the preceding claims, **characterized in that** the cover (11, 11a, 11b, 11c) is produced from a flexible material, for example from flexible plastic.

## Revendications (Revendications pour l'(les) Etat(s) contractant(s) suivant(s): DE, ES, GB)

1. Raclette d'essuie-glace (101) pour un dispositif d'essuyage destiné à essuyer des pare-brise de véhicules, laquelle raclette d'essuie-glace comporte un caoutchouc d'essuyage (102) avec une lèvre d'essuyage (103) dirigée vers le pare-brise, un dos (104) opposé au pare-brise et une nervure de basculement (105) reliant la lèvre d'essuyage (103) au dos (104), un élément de support (107) élastique, en forme de bande qui stabilise le caoutchouc d'essuyage (102) et qui peut être relié à un bras d'essuyage entraîné transversalement à l'étendue longitudinale de la raclette d'essuie-glace et qui peut être contraint en direction du pare-brise, et une enveloppe (108) qui entoure au moins par portion l'élément de support (107) et le dos (104), qui favorise l'écoulement, qui entoure l'élément de support (107) et le dos (104) dans la direction longitudinale de l'essuie-glace (101) et qui recouvre la face supérieure du dos (104) opposée à la lèvre d'essuyage (103) et qui recouvre en outre, dans une projection orientée parallèlement au pare-brise vers l'étendue longitudinale de la raclette d'essuie-glace, et qui correspond à la direction d'écoulement.

2. Raclette d'essuie-glace (101) selon la revendication 1, dans laquelle l'enveloppe (108) recouvre également la partie (112) de la lèvre d'essuyage (103) qui est opposée au pare-brise.

3. Raclette d'essuie-glace (101) selon les revendications 1 et 2, dans laquelle l'enveloppe (108) a une section quasiment elliptique.

4. Raclette d'essuie-glace (101) selon l'une des revendications précédentes, dans laquelle l'enveloppe (108) présente, au moins par portion, une structure de surface destinée à réduire la résistance à l'air.

5. Raclette d'essuie-glace (101) selon la revendication 4, dans laquelle la structure de surface présente des creux (113) en forme de segments sphériques.

6. Raclette d'essuie-glace (101) selon l'une des revendications précédentes, dans laquelle l'enveloppe (108) présente, du côté du vent, un générateur de turbulences.

7. Raclette d'essuie-glace (101) selon l'une des revendications précédentes, dans laquelle la lèvre d'essuyage (103), dotée d'une nervure de basculement (105), est disposée élastiquement dans une direction orthogonale au pare-brise.

8. Raclette d'essuie-glace (101) selon la revendication 7, dans laquelle le dos (104) présente une région de membrane pour l'agencement élastique de la lèvre d'essuyage (103).

9. Raclette d'essuie-glace (101) selon la revendication 8, dans laquelle la région de membrane est formée par au moins un espace (117) ménagé dans le dos (104).

10. Raclette d'essuie-glace (101) selon la revendication 9, dans laquelle l'épaisseur (18) entre l'espace (117) et le côté du dos (104) dirigé vers la lèvre d'essuyage (103) correspond sensiblement à l'épaisseur de la nervure de basculement (105).

11. Raclette d'essuie-glace (101) selon l'une des revendications précédentes, dans laquelle l'enveloppe (108) présente une stabilité propre qui stabilise la raclette d'essuie-glace (1) dans son intégralité et s'oppose à une déformation plastique de l'élément de support (107).

12. Raclette d'essuie-glace (101) selon l'une des revendications précédentes, dans laquelle l'enveloppe (108) entoure également les extrémités libres de l'élément de support (107) et du dos (104).

13. Raclette d'essuie-glace (101) selon les revendications 1 à 11, dans laquelle l'enveloppe (108) comporte, à ses extrémités libres, des caches de revêtement.

14. Raclette d'essuie-glace (101) selon l'une des revendications précédentes, dans laquelle le côté de l'élément de support (107) qui est dirigé vers le dos (104) est collé au côté du dos (104) dirigé vers l'élément de support (107).

15. Raclette d'essuie-glace (101) selon l'une des revendications précédentes, dans laquelle l'élément de support (104) est un élément métallique élastique, et en ce que l'enveloppe (108) est un élément en matière plastique.

16. Raclette d'essuie-glace (101) selon l'une des revendications précédentes, dans laquelle l'élément de support (104) est doté d'un revêtement, en particulier d'un revêtement en matière plastique.

17. Raclette d'essuie-glace (1) destinée à nettoyer des pare-brise de véhicules, en particulier de véhicules automobiles, laquelle raclette d'essuie-glace comporte une baguette d'essuyage allongée (2) qui est fabriquée à partir d'un matériau caoutchouteux élastique et qui est configurée dans la région de sa face inférieure, solidairement avec au moins une lèvre d'essuyage (7) pouvant être appliquée contre le pare-brise respectif du véhicule, ainsi qu'au moins un rail élastique (3, 4, 21) qui s'étend dans la direction longitudinale de la baguette d'essuyage (2, 2a, 2b, 2c) et est maintenu contre celle-ci et qui fait saillie par au moins un grand côté extérieur (3'', 4") au-dessus d'un grand côté de la baguette d'essuyage, l'une des baguettes d'essuyage (2, 2a, 2b, 2c) étant maintenue au niveau d'au moins un rail élastique (3, 4) sur son revêtement (11, 11a, 11b, 11c) qui recouvre la face supérieure opposée à la lèvre d'essuyage (7) et qui est configuré pour favoriser l'écoulement et qui recouvre une nervure de basculement (8) reliant la lèvre (7) à un corps de baguette d'essuyage (5) dans une projection qui est orientée parallèlement au pare-brise vers l'étendue longitudinale de la raclette d'essuie-glace (1), et qui correspond à la direction d'écoulement.

18. Raclette d'essuie-glace selon la revendication 17, dans laquelle le revêtement (11, 11a, 11b, 11c) recouvre également au moins un rail élastique.

19. Raclette d'essuie-glace selon l'une des revendications précédentes, dans laquelle le revêtement (11, 11a, 11b, 11c) est maintenu par encliquetage sur au moins un rail élastique (3, 4 ; 21).

20. Raclette d'essuie-glace selon l'une des revendications précédentes, dans laquelle le revêtement (11, 11a, 11b, 11c) comporte des évidements (14, 15) dans lesquels au moins un rail élastique (3, 4 ; 21) s'engage par ses bords longitudinaux extérieurs (3'', 4'').

21. Raclette d'essuie-glace selon l'une des revendications précédentes, dans laquelle le revêtement est doté, sur sa face inférieure dirigée vers la face inférieure de la baguette d'essuyage (2, 2a, 2b, 2c), d'un évidement (13, 13a, 13b, 13c) dans lequel la baguette d'essuyage (2, 2a, 2b, 2c) est reçue au moins partiellement.

22. Raclette d'essuie-glace selon l'une des revendications précédentes, dans laquelle deux rails élastiques séparés (3, 4) sont prévus, chacun d'eux s'engageant dans une gorge de grand côté (9) de la baguette d'essuyage (2, 2a, 2b, 2c) et dépassant de cette gorge au-dessus du côté respectif de la baguette essuyage.

23. Raclette d'essuie-glace selon l'une des revendications 17 à 21, dans laquelle un unique rail élastique (21) est prévu, qui fait saillie avec deux bords longitudinaux au-dessus d'un grand côté de la baguette d'essuyage (2, 2a, 2b, 2c), et dans lequel le revêtement (11, 11a, 11b, 11c) est maintenu au niveau des deux bords longitudinaux du rail élastique (21).

24. Raclette d'essuie-glace selon la revendication 23, dans laquelle le rail élastique (21) forme, des deux cotés d'au moins une fente (22), des portions de rail élastique (21').

25. Raclette d'essuie-glace selon la revendication 24, dans laquelle les portions de rail élastique (21') sont reçues chacune dans une gorge de grand côté (9) de la baguette d'essuyage (2, 2a, 2b, 2c), et dans laquelle la fente (22) du rail élastique (21) est remplie au moins partiellement par de la matière de la baguette d'essuyage (2, 2a, 2b, 2c).

26. Raclette d'essuie-glace selon l'une des revendications précédentes, dans laquelle le revêtement (11) est configuré en calotte, avantageusement avec une face supérieure incurvée convexe.

27. Raclette d'essuie-glace selon l'une des revendications précédentes, dans laquelle le revêtement (11b) présente en coupe transversale un contour extérieur correspondant à une forme de goutte ou une partie d'une forme de goutte.

28. Raclette d'essuie-glace selon l'une des revendications précédentes 17 à 26, dans laquelle la face supérieure du revêtement (11b) est configurée en déflecteur aérodynamique présentant au moins une surface de déflecteur (20).

29. Raclette d'essuie-glace selon l'une des revendications précédentes, dans laquelle le revêtement (11, 11b, 11c) comporte, sur au moins un grand côté de la raclette d'essuie-glace (1, 1b, 1c), une portion (16, 16a, 16b) de type baguette dépassant au-dessus de la face inférieure du revêtement.

30. Raclette d'essuie-glace selon la revendication 29, dans laquelle la portion de type baguette (16) est configurée sur une surface extérieure opposée à la baguette d'essuyage en déflecteur aérodynamique ou est dotée d'une surface de déflecteur (16).

31. Raclette d'essuie-glace selon l'une des revendications précédentes, dans laquelle le revêtement (11, 11a, 11b, 11c) est fabriqué à partir d'un matériau élastique, par exemple une matière plastique élastique.

## Revendications (Revendications pour l'(les) Etat(s) contractant(s) suivant(s): FR, IT)

1. Raclette d'essuie-glace (101) pour un dispositif d'essuyage destiné à essuyer des pare-brise de véhicules, laquelle raclette d'essuie-glace comporte un caoutchouc d'essuyage (102) qui comporte une lèvre d'essuyage (103) dirigée vers le pare-brise, un dos (104) opposé au pare-brise et une nervure de basculement (105) reliant la lèvre d'essuyage (103) au dos (104), un élément de support (107) élastique, en forme de bande qui stabilise le caoutchouc d'essuyage (102) et qui peut être relié à un bras d'essuyage entraîné transversalement à l'étendue longitudinale de la raclette d'essuie-glace et qui peut être contraint en direction du pare-brise, et une enveloppe (108) qui entoure au moins par portion l'élément de support (107) et le dos (104), l'enveloppe étant configurée pour favoriser l'écoulement et entourant l'élément de support (107) et le dos (104) dans l'étendue longitudinale de la raclette d'essuie-glace (101), **caractérisée en ce que** l'enveloppe (108) recouvre la nervure de basculement (105) dans une projection qui est orientée parallèlement au pare-brise vers l'étendue longitudinale de la raclette d'essuie-glace et qui correspond à la direction d'écoulement.

2. Raclette d'essuie-glace (101) selon la revendication 1, **caractérisée en ce que** l'enveloppe (108) recouvre également la partie (112) de la lèvre d'essuyage (103) qui est opposée au pare-brise.

3. Raclette d'essuie-glace (101) selon les revendications 1 et 2, **caractérisée en ce que** l'enveloppe (108) a une section quasiment elliptique.

4. Raclette d'essuie-glace (101) selon l'une des revendications précédentes, **caractérisée en ce que** l'enveloppe (108) présente au moins par portion une structure de surface destinée à réduire la résistance à l'air.

5. Raclette d'essuie-glace (101) selon la revendication 4, **caractérisée en ce que** la structure de surface présente des creux (113) en forme de segments sphériques.

6. Raclette d'essuie-glace (101) selon l'une des revendications précédentes, **caractérisée en ce que** l'enveloppe (108) présente, du côté du vent, un générateur de turbulences.

7. Raclette d'essuie-glace (101) selon l'une des revendications précédentes, **caractérisée en ce que** la lèvre d'essuyage (103), dotée d'une nervure de basculement (105), est disposée élastiquement dans une direction orthogonale au pare-brise.

8. Raclette d'essuie-glace (101) selon la revendication 7, **caractérisée en ce que** le dos (104) présente une région de membrane pour l'agencement élastique de la lèvre d'essuyage (103).

9. Raclette d'essuie-glace (101) selon la revendication 8, **caractérisée en ce que** la région de membrane est formée par au moins un espace (17) ménagé dans le dos (104).

10. Raclette d'essuie-glace (101) selon la revendication 9, **caractérisée en ce que** l'épaisseur (18) entre l'espace (117) et le côté du dos (104) dirigé vers la lèvre d'essuyage (103) correspond sensiblement à l'épaisseur de la nervure de basculement (105).

11. Raclette d'essuie-glace (101) selon l'une des revendications précédentes, **caractérisée en ce que** l'enveloppe (108) présente une stabilité propre qui stabilise la raclette d'essuie-glace (1) dans son intégralité et s'oppose à une déformation plastique de l'élément de support (107).

12. Raclette d'essuie-glace (101) selon l'une des revendications précédentes, **caractérisée en ce que** l'enveloppe (108) entoure également les extrémités libres de l'élément de support (107) et du dos (104).

13. Raclette d'essuie-glace (101) selon les revendications 1 à 11, **caractérisée en ce que** l'enveloppe (108) comporte à ses extrémités libres des caches de revêtement.

14. Raclette d'essuie-glace (101) selon l'une des revendications précédentes, **caractérisée en ce que** le côté de l'élément de support (107) qui est dirigé vers le dos (104) est collé au côté du dos (104) dirigé vers l'élément de support (107).

15. Raclette d'essuie-glace (101) selon l'une des revendications précédentes, **caractérisée en ce que** l'élément de support (104) est un élément métallique élastique, et **en ce que** l'enveloppe (108) est un élément en matière plastique.

16. Raclette d'essuie-glace (101) selon l'une des revendications précédentes, **caractérisée en ce que** l'élément de support (104) est doté d'un revêtement, en particulier d'un revêtement en matière plastique.

17. Raclette d'essuie-glace (1) destinée à nettoyer des pare-brise de véhicules, en particulier de véhicules automobiles, laquelle raclette d'essuie-glace comporte une baguette d'essuyage allongée (2) qui est fabriquée à partir d'un matériau caoutchouteux élastique et qui est configurée, dans la région de sa face inférieure, solidairement avec au moins une lèvre d'essuyage (7) pouvant être appliquée contre le pare-brise respectif du véhicule, ainsi qu'au moins un rail élastique (3, 4, 21) qui s'étend dans la direction longitudinale de la baguette d'essuyage (2, 2a, 2b, 2c) et est maintenu contre celle-ci, et qui fait saillie par au moins un grand côté extérieur (3 ", 4") au-dessus d'un grand côté de la baguette d'essuyage, l'une des baguettes d'essuyage (2, 2a, 2b, 2c) étant maintenue au niveau d'au moins un rail élastique (3, 4), sur son revêtement (11, 11a, 11b, 11c) qui recouvre la face supérieure opposée à la lèvre d'essuyage (7), **caractérisée en ce que** le revêtement (11, 11a, 11b, 11c) recouvre une nervure de basculement (8) reliant la lèvre (7) à un corps de baguette d'essuyage (5) dans une projection qui est orientée parallèlement au pare-brise vers l'étendue longitudinale de la raclette d'essuie-glace (1) et qui correspond à la direction d'écoulement (109).

18. Raclette d'essuie-glace selon la revendication 17, **caractérisée en ce que** le revêtement (11, 11a, 11b, 11c) recouvre également le au moins un rail élastique.

19. Raclette d'essuie-glace selon l'une des revendications précédentes, **caractérisée en ce que** le revêtement (11, 11a, 11b, 11c) est maintenu par encliquetage sur le au moins un rail élastique (3, 4 ; 21).

20. Raclette d'essuie-glace selon l'une des revendications précédentes, **caractérisée en ce que** le revêtement (11, 11a, 11b, 11c) comporte des évidements (14, 15) dans lesquels le au moins un rail élastique (3, 4 ; 21) s'engage par ses bords longitudinaux extérieurs (3", 4").

21. Raclette d'essuie-glace selon l'une des revendications précédentes, **caractérisée en ce que** le revêtement est doté, sur sa face inférieure dirigée vers la face inférieure de la baguette d'essuyage (2, 2a, 2b, 2c), d'un évidement (13, 13a, 13b, 13c) dans lequel la baguette d'essuyage (2, 2a, 2b, 2c) est reçue au moins partiellement.

22. Raclette d'essuie-glace selon l'une des revendications précédentes, **caractérisée en ce que** deux rails élastiques séparés (3, 4) sont prévus, chacun d'eux s'engageant dans une gorge de grand côté (9) de la baguette d'essuyage (2, 2a, 2b, 2c) et dépassant de cette gorge au-dessus du côté respectif de la baguette essuyage.

23. Raclette d'essuie-glace selon l'une des revendications 17 à 21, **caractérisée en ce qu'**un unique rail élastique (21) est prévu, qui fait saillie avec deux bords longitudinaux au-dessus d'un grand côté de la baguette d'essuyage (2, 2a, 2b, 2c) et **en ce que** le revêtement (11, 11a, 11b, 11c) est maintenu au niveau des deux bords longitudinaux du rail élastique (21).

24. Raclette d'essuie-glace selon la revendication 23, **caractérisée en ce que** le rail élastique (21) forme, des deux cotés d'au moins une fente (22), des portions de rail élastique (21').

25. Raclette d'essuie-glace selon la revendication 24, **caractérisée en ce que** les portions de rail élastique (21') sont reçues chacune dans une gorge de grand côté (9) de la baguette d'essuyage (2, 2a, 2b, 2c), et **caractérisée en ce que** la fente (22) du rail élastique (21) est remplie au moins partiellement par de la matière de la baguette d'essuyage (2, 2a, 2b, 2c).

26. Raclette d'essuie-glace selon l'une des revendications précédentes, **caractérisée en ce que** le revêtement (11) est configuré en calotte, avantageusement avec une face supérieure incurvée convexe.

27. Raclette d'essuie-glace selon l'une des revendications précédentes, **caractérisée en ce que** le revêtement (11b) présente, en coupe transversale, un contour extérieur correspondant à une forme de goutte ou une partie d'une forme de goutte.

28. Raclette d'essuie-glace selon l'une des revendications précédentes 17 à 26, **caractérisée en ce que** la face supérieure du revêtement (11c) est configurée en déflecteur aérodynamique présentant au moins une surface de déflecteur (20).

29. Raclette d'essuie-glace selon l'une des revendications précédentes, **caractérisée en ce que** le revêtement (11, 11b, 11c) comporte sur, au moins un grand côté de la raclette d'essuie-glace (1, 1b, 1c) une portion (16, 16a, 16b) de type baguette dépassant de la face inférieure du revêtement.

30. Raclette d'essuie-glace selon la revendication 29, **caractérisée en ce que** la portion de type baguette (16) est configurée sur une surface extérieure opposée à la baguette d'essuyage en déflecteur aérodynamique ou est dotée d'une surface de déflecteur (16).

31. Raclette d'essuie-glace selon l'une des revendications précédentes, **caractérisée en ce que** le revêtement (11, 11a, 11b, 11c) est fabriqué à partir d'un matériau élastique, par exemple une matière plastique élastique.
